# EUROPEAN PATENT SPECIFICATION

(11) **EP 3 329 660 B1**
(45) Date of publication and mention of the grant of the patent: **06.05.2020**
(21) Application number: 16833224.5
(22) Date of filing: 22.07.2016
(51) Int. Cl.: H04L 29/08, H04L 12/28, G05B 11/01, G05B 19/414

(54) **NETWORK APPARATUS, SERVER, AND CONTROL METHODS THEREOF**
NETZWERKVORRICHTUNG, SERVER UND STEUERUNGSVERFAHREN DAFÜR
APPAREIL DE RÉSEAU, SERVEUR ET LEURS PROCÉDÉS DE COMMANDE

(30) Priority: 31.07.2015 KR 20150108946
(43) Date of publication of application: 06.06.2018
(73) Proprietor: Samsung Electronics Co., Ltd., Suwon-si, Gyeonggi-do 16677 (KR)
(72) Inventor: JUNG, Seung-ho, Anyang-si Gyeonggi-do 13922 (KR); KIM, Young-jin, Yongin-si Gyeonggi-do 16948 (KR); SHIN, Hyun-jae, Seoul 05501 (KR); OH, Joon-seop, Yongin-si Gyeonggi-do 16944 (KR); WON, Young-min, Suwon-si Gyeonggi-do 16548 (KR); YI, Sang-ung, Suwon-si Gyeonggi-do 16509 (KR)
(74) Representative: Gulde & Partner
(86) International application number: PCT/KR2016/008016
(87) International publication number: WO 2017/022988

(56) References cited:
- WO-A1-2006/043132
- US-A1- 2004 177 072
- US-A1- 2005 044 225
- US-A1- 2008 221 715
- US-A1- 2010 289 643
- US-A1- 2013 139 089
- US-A1- 2015 094 828
- US-A1- 2015 161 835
- US-A1- 2015 195 100

## Description

### [Technical Field]

Disclosed are apparatuses and methods that relate to a user terminal apparatus and a control method thereof, and for example, to a network apparatus for controlling a plurality of devices, a server, and control methods thereof.

### [Background Ar

Due to development of electronic technology, various types of network services have been provided.

An existing home network system refers to a network system that enables intellectualized communications by performing network matching between a home network installed in a home and an external communication network. Sharing of information resources in the home and utilities of individual products may be maximized through networking described above.

US 2010/0289643 A1 describes techniques for providing remote device control and/or energy monitoring, wherein a system monitors sensor data captured by one or more sensors that sense attributes relevant to user presence at one or more monitored properties and status of one or more energy consuming devices associated with the one or more monitored properties. The system further analyzes the monitored sensor data and the monitored device status with respect to a set of one or more rules and performs an operation related to controlling the one or more energy consuming devices based on the analysis of the monitored sensor data and the monitored device status with respect to the set of one or more rules.

US 2015/0195100 A1 discloses a home management system including a first network device and a second network device in wireless communication with said first network device; at least one zone; at least one sensor being disposed in the zone, wherein the sensor is in wireless communication with the first network device to detect the presence of the first network device in the zone. Additionally, the sensor is in wireless communication with the second network device to control the second network device in response to instructions from the first network device.

US 2015/0094828 A1 discloses a method including: wirelessly receiving information by a user device during a first time period from one or more terminal devices that are in range of the user device, wherein each of the terminal devices is configured to monitor a respective piece of equipment associated with the terminal device; determining that the user device is located in a first space of a plurality of spaces of a physical structure based on the obtained information; responsive to determining that the user device is located in the first space, presenting a graphical representation of one or more pieces of equipment that are physically located in the first space wherein each piece of equipment is associated with a different one of the terminal devices; receiving energy usage information from one or more of the terminal devices that are each associated with a respective piece of equipment that is physically located in the first space; and presenting the received energy usage information in the graphical representation.

US 2008/0221715 A1 discloses a control server which manages the distribution of data, voice, and control signals among a plurality of devices connected via a wired and/or wireless communications network, wherein the devices include audio/visual devices and wherein the control server supports video/audio serving, telephony, messaging, file sharing, internetworking, and security. Therein, a portable controller allows a user to access and control the network devices from any location within a controlled residential and/or non-residential environment, including its surrounding areas. The controllers are enhanced to support location-awareness and user-awareness functionality.

However, in order to meet needs of users who want newer and more various functions, there are growing interests in Internet of Things (loT) services that enable things to be connected to one another through a network so as to share information in various fields such as home appliances, electronic devices, healthcare products, telemetering, a smart home, a smart car, etc.

Therefore, there is a need for methods of further efficiently using loT services.

### [Disclosure]

### [Technical Problem]

The disclosure provides a network apparatus capable of automatically providing a service complying with a registered environment condition in a private service space if a user registers a desired environment condition once, a server, and control methods thereof.

### [Technical Solution]

Example embodiments address the above disadvantages and other disadvantages not described above.

According to an embodiment of the disclosure, a network apparatus includes a communication circuitry configured to communicate with a server storing environment condition information corresponding to at least one user and at least one device installed in a preset service space; and a processor configured to: receive, based on a determination that a user moves from a first service space into a second service space, environment condition information corresponding to the user from the server, control an operation state of a first device installed in the second service space based on the received environment condition information, wherein the received environment condition information comprises information on an operation state of a second device installed in the first service space, and wherein a function of the first device is same as or similar to a function of the second device, wherein the function of the first device and the function of the second device are compared to determine the first device having the similar function to the second device based on at least one of product names, model names, and function information.

The communication circuitry may communicate with a user terminal apparatus that is mobile. In response to a check being made that the user terminal apparatus is operably connected to the communication circuitry, the processor may determine that a user of the user terminal apparatus enters into the service space and transmit user entry information to the server.

The environment condition information may include information about at least one environment setting of an electric lamp, heating, and air. The processor may control an operation state of at least one selected from an electric lamp-related device, a heating-related device, and an air-related device based the received environment condition information.

The server may further store environment condition information corresponding to a preset object affected by an environment condition. The processor may control an operation state of the related device based on the environment condition information corresponding to the preset object based on a preset event and transmit information about the operation state of the related device to the server.

The environment condition information stored in the server may be information that is set by the user or information that is selected by the user from recommended information corresponding to at least one user situation provided from the server.

According to another embodiment of the disclosure, a server includes a storage configured to store environment condition information corresponding to at least one user and at least one device installed in a preset service space; a communication circuitry; and a processor configured to: transmit, based on user entry information indicating that a user moves from a first service space into a second service space being received from the network apparatus, information about an environment condition corresponding to the user stored in the storage to the network apparatus to enable a first device installed in the second service space to operate based on the environment condition, and compare a function of the first device and a function of a second device installed in the first service space to determine the first device having a similar function to the second device based on at least one of product names, model names, and function information, wherein the processor is configured to, based on a determination that the user moves from the first service space into the second service space, transmit control information for controlling an operation state of the first device, installed in the second service space to a second network apparatus installed in the second service space, wherein the information about the environment condition comprises information on an operation state of the second device installed in the first service space, and wherein the first device performs a same or similar function to the second device.

The information about the environment condition may include information about at least one environment setting of an electric lamp, heating, and air. A plurality of devices may include at least one selected from an electric lamp-related device, a heating-related device, and an air-related device.

In response to a determination that the user moves from a first service space to a second service space, the processor may be configured to transmit control information for controlling an operation state of a second device related to the first device installed in the second service space to a network apparatus installed in a service space where the second device is installed, based on information about an operation state of a first device installed in the first service space.

The processor may provide recommended information about an environment condition appropriate for a user based on a particular situation and store information selected by the user from the provided recommended information as information about an environment condition corresponding to the user.

According to an unclaimed aspect of the disclosure, a system includes a network apparatus configured to be installed in a preset service space and a server configured to communicate with the network apparatus. The system includes the server configured to store information about an environment condition corresponding to a user and, in response to user entry information indicating that the user enters the service space, being received from the network apparatus, to transmit information about the environment condition to the network apparatus, and the network apparatus configured to, in response to a determination that the user enters into the service space, transmit user entry information to the user, receive environment condition information corresponding to the user from the server, to control an operation state of a related device of at least one devices based on the received environment condition information.

According to another embodiment of the disclosure, a method of controlling a network apparatus, includes: receiving environment condition information corresponding to a user from a server storing the environment condition information corresponding to the user based on a determination being made that the user moves from a first service space into a second service space, comparing a function of a first device installed in the second service space and a function of a second device installed in the first service space to determine the first device having a similar function to the second device based on at least one of product names, model names, and function information, controlling an operation state of the first device based on the received environment condition information, wherein the received environment condition information comprises information on an operation state of the second device, and wherein the first device performs a same or similar function to the second device.

The receiving of the environment condition information corresponding to the user may include, in response to a determination being made that a user terminal apparatus of the user is connected to the network apparatus, determining that the user of the user terminal apparatus enters into the service space and transmitting user entry information to the server.

The environment condition information may include information about at least one environment setting of an electric lamp, heating, and air. The controlling of the operation state of the related device may include controlling an operation state of at least one of an electric lamp-related device, a heating-related device, and an air-related device based on the received environment condition information.

The server may further store environment condition information specialized for a preset object affected by an environment condition. The method may further include controlling the operation state of the related device based on the environment condition information specialized for the preset object based on a preset event and transmitting information about the operation state of the related device to the server.

The environment condition information stored in the server may be information that is set by the user or information that is selected by the user from recommended information corresponding to at least one user situation provided from the server.

According to another unclaimed aspect of the disclosure, a method of controlling a server configured to be installed in a preset service space to communicate with a network apparatus configured to control at least one device installed in the service space, includes receiving user entry information indicating that the user enters into the service space, from the network apparatus, and transmitting pre-stored information about an environment condition corresponding to the user to the network apparatus to enable the at least one device to operate based on a particular environment condition.

The information about the environment condition may include information about at least one environment setting of an electric lamp, heating, and air. A plurality of device may include at least one selected from an electric lamp-related device, a heating-related device, and an air-related device.

Also, the method may further include, in response to a determination that the user moves from a first service space into a second service space, transmitting control information, to control an operation state of a second device related to a first device installed in the second service, to a network apparatus installed in a service space where the second device is installed, based on information about an operation state of the first device installed in the first service space.

The method may further include providing recommended information about an environment condition appropriate for a user and storing information, which is selected by the user from the provided recommended information, as information about an environment condition corresponding to the user.

According to another unclaimed aspect of the disclosure, a method of controlling a system including a network apparatus configured to be installed in a preset service space and a server configured to communicate with the network apparatus, comprises transmitting, in response to a determination that the user enters into the service space, user entry information from the network apparatus to the server, transmitting, in response to the user entry information being received from the network apparatus, pre-stored information about an environment condition corresponding to the user from the server to the network apparatus, and controlling, in response to the environment condition being received from the server, an operation state of a related device of at least one devices based on the received environment condition information using the network apparatus.

Additional and/or other aspects and advantages of the disclosure will be set forth in part in the description which follows and, in part, will be apparent from the description.

### [Advantageous Effects]

According to various example embodiments of the disclosure as described above, an environment condition desired by a user may be automatically provided in a private service space, thereby improving convenience of the user.

### [Description of Drawings]

The above and/or other aspects will be more apparent from the following detailed description, taken in conjunction with the accompanying drawings, in which like reference numerals refer to like elements, and wherein:
FIG. 1 is a diagram illustrating an example electronic system according to an example embodiment;
FIG. 2 is a diagram illustrating an example network system according to an example embodiment;
FIG. 3 is a block diagram illustrating an example configuration of a network apparatus according to an example embodiment;
FIG. 4A is a block diagram illustrating an example configuration of a server according to an example embodiment;
FIG. 4B is a block diagram illustrating an example configuration of the server of FIG. 4A
FIG. 4C is a block diagram illustrating various examples of types of modules stored in a storage unit;
FIG. 5A is a block diagram illustrating an example configuration of a user terminal apparatus according to an example embodiment;
FIGS. 5B and 5C are block diagrams illustrating example configurations of a server, according to example embodiments;
FIGS. 6 and 7A through 7C are diagrams illustrating an example operation relation between a network apparatus, a server, and a user terminal apparatus, according to an example embodiment;
FIGS. 8 and 9 are diagrams illustrating an example operation relation between a network apparatus, a server, and a user terminal apparatus, according to another example embodiment;
FIGS. 10, 11, 12A, 12B and 13 are diagrams illustrating an example operation relation between a network apparatus, a server, and a user terminal apparatus, according to another example embodiment;
FIG. 14 is a sequence diagram illustrating an example operation relation between a network apparatus, a server, and a user terminal apparatus, according to an example embodiment;
FIG. 15 is a sequence diagram illustrating an example operation relation between a network apparatus, a server, and a user terminal apparatus, according to another example embodiment;
FIG. 16 is a flowchart illustrating an example method of controlling a network apparatus, according to an example embodiment; and
FIG. 17 is a flowchart illustrating an example method of controlling a server, according to an example embodiment.

### [Best Mode]

### [Mode for Invention]

Certain example embodiments of the present disclosure will now be described in greater detail with reference to the accompanying drawings.

In the following description, same drawing reference numerals are used for the same elements even in different drawings. The matters defined in the description, such as detailed construction and elements, are provided to assist in an understanding of the disclosure. Thus, it is apparent that the example embodiments of the present disclosure can be carried out without those specifically defined matters. Also, well-known functions or constructions may not be described in detail when they may obscure the disclosure with unnecessary detail.

Hereinafter, the disclosure will be described in greater detail with reference to the attached drawings.

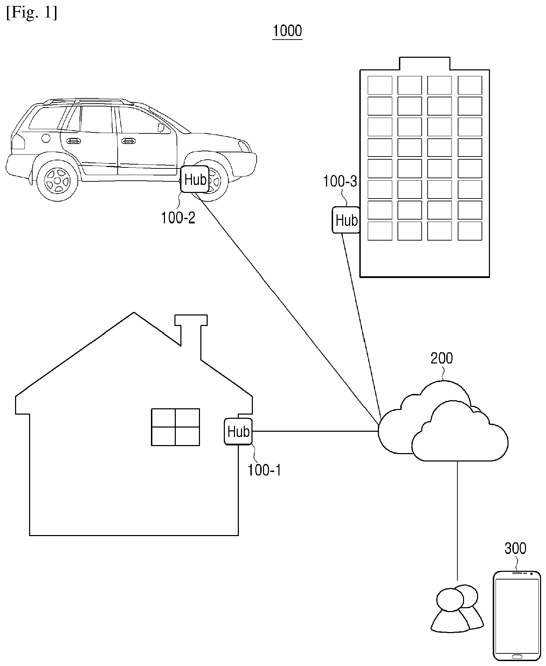

FIG. 1 is a diagram illustrating an example electronic system 1000 according to an example embodiment. Referring to FIG. 1, the electronic system 1000 includes network apparatuses 100-1, 100-2, and 100-3, a server 200, and a user terminal apparatus 300.

The network apparatuses 100-1, 100-2, and 100-3 may be respectively installed in different service spaces (or service places) and may be realized as a network system that connects all electrical and electronic products installed in a corresponding service space to a wired-wireless integrated system so as to enable two-way communications. For example, different places may be a home, an office, a car, etc. but are not limited thereto.

The network apparatuses 100-1, 100-2, and 100-3 may be realized to provide an Internet of Things (loT) service that enables things in a particular service space to be connected to one another through a wired-wireless network so as to share information. For example, the loT service may provide various fields of services such as home appliances, electronic devices, a healthcare system, telemetering, a smart home, a smart car, etc.

The network apparatuses 100-1, 100-2, and 100-3 may be realized as Internet hub apparatuses, gateway apparatuses, or the like to control overall operations of a plurality of devices that are in communicable states with themselves in a particular place.

For example, the network apparatuses 100-1, 100-2, and 100-3 may generate a control command for controlling at least one of the plurality of devices and transmit the control command to the plurality of devices based on information received from the server 200 that will be described later. Alternatively, the network apparatuses 100-1, 100-2, and 100-3 may simultaneously control at least two of the plurality of devices based on a macro command for controlling at least two of the plurality of devices. For example, "macro" may refer, for example, to a new definition of a plurality of repeatedly performed commands as one command.

Alternatively, the network apparatuses 100-1, 100-2, and 100-3 may receive a control command from the server 200. In this example, the network apparatuses 100-1, 100-2, and 100-3 may transmit the received control command to each of the plurality of devices to control each of the plurality of devices.

The plurality of devices may be realized as various types of devices capable of providing loT services. For example, the plurality of devices may be realized as various types of devices including communication functions and sensor functions. For example, the plurality of devices may be realized as lighting-related devices such as an electric lamp, a blind, an illuminance sensor, etc., heating-related devices such as an air conditioner, a heater, a boiler, a temperature sensor, etc., air-related devices such as an air cleaner, a humidifier, a humidity sensor, etc. or the like. However, this is merely an example embodiment, and thus the plurality of devices may be realized, for example, and without limitation, as various types such as a refrigerator, a washer, a monitor, a digital versatile disc (DVD) player, a smartphone, a digital camera, an electronic frame, etc.

The server 200 communicates with the network apparatuses 100-1, 100-2, and 100-3 installed in different service spaces to transmit information for guiding/providing operation state controls of devices respectively installed in the different service spaces.

For example, the server 200 may store environment condition information specialized for or corresponding to at least one user and environment condition information specialized for or corresponding to various types of objects (e.g., a plant, an animal, etc.). For example, the stored information may be information that is directly set by a user based on items, recommended information corresponding to a user situation provided from the server 200, or information that is selected by the user from recommended information corresponding to a particular object.

The server 200 may be realized as a central server (or an integrated server) taking charge of an interaction between various types of operating systems (O/Ss) and applications in all network systems or a cloud server using a cloud computing technology, or the like. Cloud computing may refer, for example, to an Internet-based computing technology, e.g., a web-based software service that loads a program into a utility data server on the Internet, and downloads and uses the program into a computer, a portable phone, or the like when it is needed.

The user terminal apparatus 300 may be realized as a portable phone such as a smartphone as illustrated in FIG. 1 but is not limited thereto. Therefore, the user terminal apparatus 300 may be realized as various types of apparatuses that are portable and have display functions, such as, for example, and without limitation, a tablet personal computer (PC), a portable multimedia player (PMP), a personal digital assistant (PDA), a navigation system, etc. Also, the user terminal apparatus 300 may be realized to include a touch screen so as to execute a program using a finger or a pen (e.g., a stylus pen).

The user terminal apparatus 300 may access the server 200 managing an environment condition and register the environment condition in the server 200. For example, the user terminal apparatus 300 may access the server 200 through a user authentication to register an environment condition corresponding to a user.

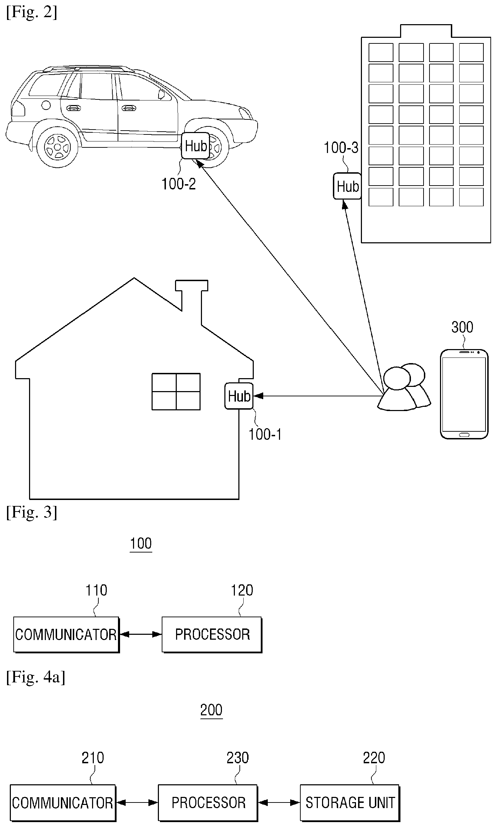

FIG. 2 is a diagram illustrating an example network system according to an example embodiment. Referring to FIG. 2, the network system includes network apparatuses 100-1, 100-2, and 100-3 and a user terminal apparatus 300.

Descriptions of the network apparatuses 100-1, 100-2, and 100-3 are the same as those of the network apparatuses 100-1, 100-2, and 100-3 of FIG. 1 and thus detailed descriptions are not repeated here.

The user terminal apparatus 300 communicates with the network apparatuses 100-1, 100-2, and 100-3 installed in different service spaces to transmit information, which is for guiding operation state controls of devices respectively installed in the different service spaces, to the network apparatuses 100-1, 100-2, and 100-3.

For example, the user terminal apparatus 300 may store environment condition information specialized for or corresponding to at least one user and environment condition information specialized for various types of objects (e.g., a plant, an animal, etc.). Here, the stored information may be information that is directly set by a user or information that is selected by the user from recommended information that corresponds to at least one user and is provided from the server 200.

Here, the user terminal apparatus 300 may be realized as a portable phone such as a smartphone as illustrated in FIG. 2 but is not limited thereto. Therefore, the user terminal apparatus 300 may be realized as various types of apparatuses that are portable and have display functions like a tablet PC, a PMP, a PDA, a navigation system, etc.

The network apparatuses 100-1, 100-2, and 100-3 may receive pre-set environment condition information from the user terminal apparatus 300 that enters into a service space where a corresponding network apparatus is installed and may control an operation state of at least one of a plurality of devices installed in the corresponding service space based on the received environment condition information.

As described above, the example embodiment of FIG. 2 is different from the example embodiment of FIG. 1 in that the user terminal apparatus 300 communicates with the network apparatuses 100-1, 100-2, and 100-3 without requiring the server 200 of FIG. 1.

However, except that the server 200 of FIG. 1 performs a function of the user terminal apparatus 300 of FIG. 2, overall operation relations are similar. Therefore, various example embodiments will now be described based on the example embodiment of FIG. 1.

FIG. 3 is a block diagram illustrating an example configuration of a network apparatus 100 according to an example embodiment.

Referring to FIG. 3, the network apparatus 100 includes a communicator (e.g., including communication circuitry) 110 and a processor 120.

The communication circuitry of the communicator 110 communicates with a plurality of devices (not shown) installed in preset service space where the server 200 and the network apparatus 100 are installed.

In particular, the communicator 110 may receive environment condition information from the server 200 and transmit a control command corresponding to the received environment condition information to a plurality of devices connected to a network in a corresponding service space.

The communicator 110 may build a network system with the server 200 and the plurality of devices using a wired-wireless Local Area Network (LAN), a Wide Area Network (WAN), Ethernet, Bluetooth (BT), 3G(3Generation), 4G(3Generation), Zigbee, IEEE 1394, wireless fidelity (WiFi), Power Line Communication (PLC), or the like.

In the above-described example embodiment, the communicator 110 has been described as one element. However, according to example embodiments, a first communicator (not shown) that communicates with the server 200 and a second communicator that communicates with a plurality of devices may be realized as separate communicators. Also, methods by which the communicator 110 communicates with the server 200 and the plurality of devices may be the same as or different from one another.

The processor 120 controls an overall operation of the network apparatus 100.

For example, if it is determined that a user enters into a particular service space, e.g., a service space where the network apparatus 100 is installed, the processor 120 transmits user entry information to the server 200. The processor 120 receives environment condition information corresponding to the user from the server 200 to control an operation state of at least one installed in a corresponding service space based on the received environment condition information.

If it is determined that the user terminal apparatus 300 is connected to the communicator 110, the processor 120 may determine that the user of the user terminal apparatus 300 enters into the corresponding service space. In other words, since the user generally carries the user terminal apparatus 300, the processor 120 may determine that the user of the user terminal apparatus 300 enters into the corresponding service space if the user terminal apparatus 300 is sensed in the corresponding service space. Here, the connection of the user terminal apparatus 300 to the communicator 110 may be a state where the user terminal apparatus 300 is connected to a network formed by the network apparatus 100. For example, if the network apparatus 100 is realized as a hub Internet apparatus, and the hub Internet apparatus is connected to a WiFi sharer (or a WiFi access point (AP)), the user terminal apparatus 300 may be in a state where the user terminal apparatus 200 is connected to the WiFi sharer but is not limited thereto.

Alternatively, the processor 120 may determine that the user enters into the corresponding service space, using a method such as a face recognition using a camera, a Near Filed Communication (NFC), or the like. For example, if a home doorlock is realized as one device in a network, the home doorlock device may recognize a fingerprint in a process of inputting passwords for unlocking.

In this case, the home doorlock device may transmit information about the recognized fingerprint to the network apparatus 100 and receive information about the corresponding fingerprint from the network apparatus 100 so as to determine that the user enters into a corresponding service space.

According to another example, if the home doorlock device includes an NFC reader, and the user terminal apparatus 300 includes an NFC tag, the processor 120 may determine that the user enters into a corresponding service space in an unlocking process through NFC. As described above, the processor 120 may determine whether the user enters into a particular service space, through various types of operations performed in a process required for entering into the particular service space without requesting an additional operation from the user.

Alternatively, the processor 120 may determine whether the user terminal apparatus 300 enters into a service space, based on Global Positioning System (GPS) information of the user terminal apparatus 300. For example, the user terminal apparatus 300 may generate position information by receiving a GPS signal transmitted from a GPS satellite (not shown), and the processor 120 may determine whether the user terminal apparatus 300 enters into the service space by acquiring the corresponding information.

The processor 120 may control an operation state of a related device to enable the related device to be in a state corresponding to an environment condition received from the server 200, based on an environment condition of a current service space detected through various types of sensors. For example, if a current temperature of a service space detected through a temperature sensor is 29°, and a temperature registered in the server 200 by the user is 26°, the processor 120 may turn on an air conditioner and simultaneously automatically adjust a target temperature of the air conditioner to 26° to lower the current temperature to the target temperature. Also, the processor 120 may control pulling up and/or down of another related device, e.g., a blind, a light intercepting degree of another related device, etc.

In this case, the processor 120 may use a macro command to control a plurality of related devices. Here, "macro" may refer, for example, to a new definition of a plurality of repeatedly performed commands as one command.

For example, if there are at least two devices related to a temperature condition, the processor 120 may set a command, which is for controlling operations of a plurality of devices, to a macro command to simultaneously control the plurality of devices. For example, in order to control a temperature, the processor 120 may set a macro command for simultaneously controlling an air conditioner and a blind to simultaneously control the air conditioner and the blind through a one-time control command.

Alternatively, the processor 120 may detect an environment condition of a current service space through various types of sensors, transmit the environment condition to the server 200, and receive a control command of a related device corresponding to the environment condition from the server 200 to control an operation state of the related device. In other words, the processor 120 may generate a control command for controlling the related device and transmit the control command to the network apparatus 100 based on information about a current environment condition that the server 200 receives from the network apparatus 100.

The processor 120 may categorize and manage a plurality of devices. For example, the processor 120 may categorize and manage a lighting-related category, a heating-related category, and an air-related category. Therefore, if an environment condition is, for example, "illuminance", the processor 120 may control devices belonging to the lighting-related category.

Also, the processor 120 may manage a category name, a device name, or the like as a name (or an identifier) provided from the server 200. In other words, network apparatuses installed in different places may manage categories and devices belonging to the categories in an integrated manner using the same name provided from the server 200.

The processor 120 may receive environment condition information about at least one of information about environment settings of an electric lamp, heating, and air and control an operation state of at least one of an electric lamp-related device, a heating-related device, and an air-related device based on the received environment condition information.

Here, environment condition information received from the server 200 may be information that is directly set by the user or information that is selected by the user from recommended information corresponding to at least one user situation provided from the server 200. For example, the user may access the server 200 using the user terminal apparatus 300 or other electronic apparatuses to register an environment condition desired by the user or may select recommended information (e.g., recommended information about a user who receives Laser-Assisted In-Situ Keratomileusis (LASIK) eye surgery or the like) corresponding to a user situation and register the recommended information in the server 200.

The processor 120 may also additionally consider a natural environment condition, e.g., a current weather, a current time, or the like, when controlling a device. For example, if an environment condition "ultraviolet protection" is registered in the server 200, and a current time is daytime, the processor 120 may automatically pull a blind down. However, if the current time is nighttime or a raining cloudy weather, the processor 120 may not control an additional operation of the blind.

Also, the processor 120 may receive an environment condition related to the user and environment condition information specialized for or corresponding to a preset object affected by an environment condition and control an operation state of a related device based on the received environment condition information.

Here, an object affected by an environment condition may be an object such as a plant, an animal, or the like but is not limited thereto. For example, if the user registers an environment condition related to growth of a plant cultivated in a home in the server 200, the processor 120 may receive corresponding information from the server 200 based on a preset event (e.g., a user request, a preset time arrival, or the like) and control an operation state of a related device according to the received environment condition information. In this case, the processor 120 may transmit information about the related device controlled according to the received environment condition information to the server 200. Therefore, although the user is not in a corresponding service space, the user may access the server 200 to check whether the corresponding device appropriately operates.

In the above-described example embodiments, devices have been described as being controlled based on an environment condition. However, the disclosure may be applied to controlling of contents. For example, if the user sets a particular music content play as a condition and enters into a home, a network apparatus installed in the home may control a home audio system to automatically play a corresponding music content. Even if the user enters into the car, a network apparatus installed in the car may control a car audio or the like to automatically play a corresponding music content. In this case, if the user ends playing of a content while the content is played in the home and then moves into the car, a network apparatus installed in the home may upload a corresponding play time to the server 200, and a network apparatus installed in the car may receive corresponding information to control the content so as to play the content from the corresponding play time.

FIG. 4A is a block diagram illustrating an example configuration of a server 200, according to an example embodiment.

Referring to FIG. 4A, the server 200 includes a communicator (e.g., including communication circuitry) 210, a storage unit 220, and a processor 230.

The communication circuitry of the communicator 210 communicates with the network apparatus 100 that is installed in at least one service space to control a plurality of devices installed in the corresponding service space and the user terminal apparatus 300 that is mobile.

In particular, the communicator 110 transmits pre-registered environment condition information to the network apparatus 100 according to a preset event.

The communicator 110 may communicate with the network apparatus 100 and the user terminal apparatus 300 by using a wire-wireless LAN, a WAN, Ethernet, BT, Zigbee, IEEE 1394, WiFi, PLC, or the like.

In the above-described example embodiment, the communicator 210 has been described as one element. However, according to example embodiments, a first communicator (not shown) that communicates with the network apparatus 100 and a second communicator (not shown) that communicates with the user terminal apparatus 300 may be realized as separate communicators. Also, methods by which the communicator 210 respectively communicates with the network apparatus 100 and the user terminal apparatus 300 may be the same as or different from one another.

The storage unit 220 stores an O/S software module for driving the server 200 and various types of data such as various types of multimedia contents.

The storage unit 220 may also store at least one selected from information about an environment condition specialized for or corresponding to a user and information about an environment condition specialized for or corresponding to a preset object affected by an environment condition. Here, in order to store the information about the environment condition in the storage unit 220, the user may access the server 200 to register desired conditions based on items or may select and register recommended information (e.g., environment condition information appropriate for a user who receives LASIK eye surgery or the like) corresponding to a user situation or recommended information (e.g., environment condition information appropriate for cultivating a particular plant or the like) corresponding to a particular object.

The storage unit 220 may store information about a plurality of devices connected to the network apparatus 100-1, 100-2, and 100-3 respectively installed in service places. For example, the storage unit 220 may store information about model names, Internet Protocol (IP) addresses or Mac addresses of the plurality of devices, service spaces where the plurality of devices are positioned, etc.

The processor 230 controls an overall operation of the server 200.

In particular, if user entry information indicating that the user enters into a corresponding service space is received from the network apparatus 100 installed in a particular service space, the processor 230 may transmit information about an environment condition set by the user to the network apparatus 100 to operate a plurality of devices based on an environment condition appropriate for the user. However, the processor 230 may determine whether the user terminal apparatus 300 enters into a particular service space based on GPS information of the user terminal apparatus 300. For example, the user terminal apparatus 300 may receive a GPS signal from a GPS satellite (not shown) to generate position information and periodically transmit the position information to the server 200. Therefore, the processor 230 may determine whether the user terminal apparatus 300 enters into the particular service space based on the corresponding information.

Also, the processor 230 may transmit environment condition information, which is specialized for a preset object affected by an environment condition, to the network apparatus 100 based on a preset event. Here, the object affected by the environment condition may be an object such as a plant, an animal, or the like but is not limited thereto.

Also, if it is determined that the user moves from a first service space into a second service space, the processor 230 may transmit control information to control an operation state of a second device related to a first device installed in the second service space, to the network apparatus 100 based on information about an operation state of a first device installed in the first service space.

In this case, the processor 230 may compare functions of devices respectively installed in service spaces to determine a second device having a similar function to a first device. The processor 230 may determine devices having similar functions based on product names, model names, function information, etc. of the devices. Also, if the second device having the similar function to the first device is determined, the processor 230 may control the first and second devices to consecutively or simultaneously perform the same or similar functions in the first and second devices.

For example, if it is determined that the user terminal apparatus 300 of the user moves from a home into a car based on information received from a network apparatus installed in a first service space and information received from an network apparatus installed in a second service space, the processor 230 may control an operation state of a Digital Multimedia Broadcasting (DMB) apparatus installed in the car based on information about an operation state of a TV installed in the home. For example, if the user watches the TV in the home and then moves into the car, the processor 230 may determine the DMB apparatus, which is a device having the same as and/or similar function to the TV, in the car and automatically turn on the DMB apparatus installed in the car. The processor 230 may automatically tune to a channel that the user watched through the TV, in the DMB apparatus. For example, if ABC channel that the user views through the TV installed in the home is channel 11 in the TV but is channel 22 in the DMB apparatus installed in the car, the processor 230 may determine channel 22 corresponding to ABC channel in the DMB apparatus to control the channel 22 to tune the channel 22. In this case, the processor 230 may control devices respectively installed in different service spaces to perform the same functions based on various types of information (e.g., information about channels of the TV and the DMB apparatus) that is pre-stored or is received from an external server or the like.

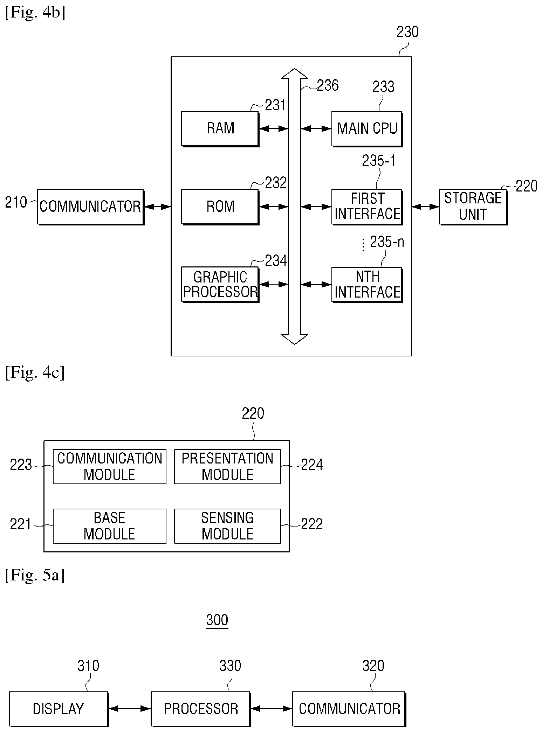

FIG. 4B is a block diagram illustrating an example configuration of the server 200 of FIG. 4A. Detailed descriptions of the same elements of FIG. 4A as those of FIG. 4A may be omitted.

The processor 230 may include, for example, one or more selected from a central processing unit (CPU), a controller, an application processor (AP) or a communication processor (CP), and an ARM processor. The processor 230 may execute operations or data processing with respect to controls and/or communications of at least other elements of the network apparatus 100.

For example, the processor 230 includes a random access memory (RAM) 231, a read only memory (ROM) 232, a main CPU 233, a graphic processor 234, first through nth interfaces 235-1 through 235-n, and a bus 236.

The RAM 231, the ROM 232, the main CPU 233, the graphic processor 234, the first through nth interfaces 235-1 through 235-n, etc. may be connected to one another through the bus 236.

The first through nth interfaces 235-1 through 235-n are connected to various types of elements as described above. One of the first through nth interfaces 235-1 through 235-n may be a network interface that is connected to an external apparatus through a network.

The main CPU 233 performs booting by using an O/S stored in the storage unit 220 by accessing the storage unit 220. The main CPU 233 performs various types of operations by using various types of programs, contents, data, etc. stored in the storage unit 220.

The ROM 232 stores a command set, etc. for booting a system. If a turn-on command is input, and thus power is supplied, the main CPU 233 copies the O/S stored in the storage unit 220 into the RAM 231 and executes the O/S to boot the system according to a command stored in the ROM 232. If the system is completely booted, the main CPU 233 copies various types of programs stored in the storage unit 220 into the RAM 231 and executes the programs copied into the RAM 231 to perform various types of operations.

The graphic processor 234 generates a screen including various types of objects such as an icon, an image, a text, etc. by using an operator (not shown) and a renderer (not shown). The operator calculates attribute values such as coordinate values at which objects will be displayed, shapes of the objects, colors of the objects, etc. according to a layout of the screen based on a received control command. The renderer generates a screen having various types of layouts including objects based on the attribute values calculated by the operator. For example, the graphic processor 234 may generate a user interface (Ul) screen for providing various types of guide information about an environment condition. An operation of the processor 230 may be performed by a program stored in the storage unit 220.

As described above, the storage unit 220 stores various types of data such an O/S software module for driving the server 20 and various types of multimedia contents.

FIG. 4C is a block diagram illustrating examples of various types of modules stored in the storage unit 220.

Referring to FIG. 4C, the storage unit 220 may include a storage to store software including a base module (e.g., including signal processing circuitry) 221, a sensing module (e.g., including sensing/sensor information analysis circuitry) 222, a communication module (e.g., including communication circuitry) 223, and a presentation module (e.g., including display circuitry) 224.

The base module 221 refers, for example, to a base module that processes signals respectively transmitted from pieces of hardware included in the server 200 and transmits the processed signals to an upper layer module. The base module 221 may include a storage module that manages a database (DB) or a registry, a security module that supports certification, permission, secure storage, etc. of the hardware, a network module that supports a network connection, etc.

The sensing module 222 is a module that analyzes and manages information that is received from the network apparatus 100 and collected through various types of sensors. The sensing module 222 may include an illuminance recognition module, an NFC module, etc.

The communication module 223 is a module that includes communication circuitry that communicates with external apparatuses. The communication module 223 may include a device module used for communicating with an external apparatus, a messaging module such as a messenger program, a Short Message Service (SMS) & Multimedia Message Service (MMS) program, an e-mail program, or the like, etc.

The presentation module 224 is a module that configures a display screen. The presentation module 224 may include a multimedia module for playing and outputting a multimedia content and a UI rendering module for performing UI and graphic processing.

FIG. 5A is a block diagram illustrating an example configuration of the user terminal apparatus 300, according to an example embodiment.

Referring to FIG. 5A, the user terminal apparatus 300 includes a display 310, a communicator (e.g., including communication circuitry) 320, and a processor 330.

The display 310 displays a screen. Here, the screen may include various types of contents such as an image, a moving image, a text, music, etc., an application execution screen including various types of contents, a graphic user interface (GUI) screen, etc.

In particular, the display 310 may display various types of UI screens provided from the server 200. For example, the display 310 may display a UI screen for setting environment conditions according to items, a UI screen for providing guides to the environment conditions, a UI screen for providing information about operation states of various types of devices controlled by the network apparatus 100, etc.

The display 310 may include a liquid crystal display (LCD), a light-emitting diode (LED) display, an organic light-emitting diode (OLED) display, a microelectromechanical system (MEMS) display, or an electronic paper display, or the like.

The display 310 may display various types of contents (e.g., a text, an image, a video, an icon, a symbol, etc.) to a user. The display 310 may include a touch screen, for example, may receive a touch, gesture, approach, or hovering input using an electronic pen or a part of a body of the user.

The communicator 320 includes communication circuitry that communicates with the server 200.

The processor 330 controls an overall operation of the user terminal apparatus 300.

In particular, the processor 330 may control the communicator 320 to transmit information about an environment condition, which is set by the user on a UI screen provided through the display 310, to the server 200.

Also, if information about an operation state of a device connected to the network apparatus 100 is received from the server 200, the processor 330 may provide a UI screen including the corresponding information through the display 310.

The processor 330 may generate GPS information indicating a position of the user terminal apparatus 300 and transmit the GPS information to at least one of the network apparatus 100 and the server 200.

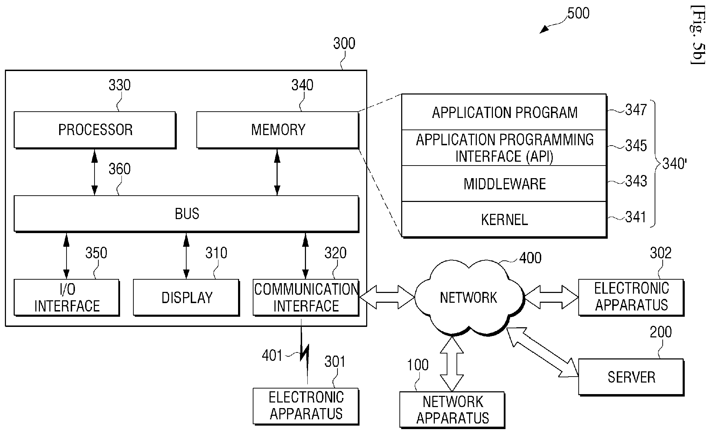

FIG. 5B is a block diagram illustrating an example of the user terminal apparatus 300 positioned in a network environment 500, according to another example embodiment. The user terminal apparatus 300 may include a display 310, a communication interface (or a communicator, e.g. including communication circuitry) 320, a processor 330, a memory (or a storage unit) 340, an input/output (I/O) interface (e.g., including I/O circuitry) 350, and a bus 360.

The communication interface 320 may set communications performed between the user terminal apparatus 300 and an external apparatus (e.g., a first external electronic apparatus 301, a second external electronic apparatus 302, or the server 200). For example, the communication circuitry of the communication interface 320 may be connected to a network 400 through wireless communication or wired communication to communicate with an external apparatus (e.g., a second external electronic apparatus 302 or the server 200).

The wireless communication may use at least one selected from Long Term Evolution (LTE), LTE Advance (LTE-A), Code Division Multiple Access (CDMA), Wideband CDMA (WCDMA), a Universal Mobile Telecommunications System (UMTS), and Global System for Mobile Communications (GSM). The wireless communication may also include short-range communication 401. The short-range communication 401 may include at least one selected from WiFi, BT, and NFC. In particular, the user terminal apparatus 300 may extract WiFi information from a WiFi signal and determine a current position of the user (e.g., a seat of the user) based on the WiFi information.

A Global Navigation Satellite System (GNSS) may include at least one selected from a GPS, a Global Navigation Satellite System (Glonass), a Beidou Navigation Satellite System (hereinafter referred to as Beidou) or Galileo, and European Global Satellite-Based Navigation System according to a use area, a band, or the like. Hereinafter, in the present specification, "GPS" may be interchangeably used with "GNSS". In particular, the user terminal apparatus 300 may determine a current position of the user by using a GPS.

The wired communication may include at least one selected from a Universal Serial Bus (USB), a High Definition Multimedia Interface (HDMI), Recommended Standard 232 (RS-232), and a Plain Old Telephone Service (POTS). The network 400 may include at least one selected from a telecommunications network, a computer network (e.g., an LAN or a WAN), Internet, and a telephone network.

The processor 330 may include one or more selected from a CPU, an AP, and a CP. For example, the processor 330 may perform operation or data processing with respect to controls and/or communications of at least one other elements of the user terminal apparatus 300.

The memory 340 may include volatile and/or nonvolatile memories. For example, the memory 340 may store a command or data related to at least one element of the user terminal apparatus 300. According to an example embodiment, the memory 340 may store a software and/or program 340'. The program 340' may, for example, include a kernel 341, middleware 343, an application programming interface (API) 345, and/or an application program (or an application or an App) 347. At least a part of the kernel 341, the middleware 343, or the API 345 may be referred to as an O/S.

In particular, various types of application programs executed in the user terminal apparatus 300 may generate various types of log data. The user terminal apparatus 300 may store the various types of log data in the memory 340. The user terminal apparatus 300 may also predict a current position and a current situation of the user by analyzing log data. For example, the log data may include information about a date and a time, schedule information of the user, etc. The user terminal apparatus 300 may predict the current position and the current situation of the user by analyzing the information about the date and the time and the schedule information of the user.

The kernel 341 may control or manage system resources (e.g., the bus 360, the processor 330, the memory 340, or the like) used for performing operations or functions realized in other programs (e.g., the middle ware 343, the API 345, and the application program 347). Also, the kernel 341 may provide an interface capable of controlling or managing the system resources by accessing individual elements of the user terminal apparatus 300 from the middleware 343, the API 345, or the application program 347.

The middleware 343 may intermediate between the API 345 or the application program 347 and the kernel 341 so as to enable the API 345 or the application program 347 to communicate with the kernel 341 and exchange data with the kernel 341.

Also, the middleware 343 may process one or more task requests received from the application program 347 according to priority orders. For example, the middleware 343 may give at least one of the application program 347 a priority order of using a system resource (e.g., the processor 330, the memory 340, the bus 360, or the like). For example, the middleware 343 may process one or more task requests according to the priority order given to the at least one and perform scheduling or load-balancing with respect to the one or more task requests.

The API 345 is an interface through which the application program 347 controls a function provided from the kernel 341 or the middleware 343. For example, the API 345 may include at least one interface or function (e.g., a command) for a file control, a window control, image processing, a letter control, or the like.

The I/O interface 350 may operate as an interface capable of transmitting a command or data input from the user or another external device to other elements of the user terminal apparatus 300. Also, the I/O interface 350 may output a command or data received from other elements of the user terminal apparatus 300 to the user or another external device.

The bus 360 may include a circuit that connects elements 310 through 350 to one another and transmits communications (e.g., a control message and/or data) between the elements 310 through 350.

The first and second external electronic apparatuses 301 and 302 may be the same types of apparatuses as or different types of apparatuses from the user terminal apparatus 300. According to an example embodiment, the server 200 may include a group of one or more severs. According to various example embodiments, all or some of operations performed in the user terminal apparatus 300 may be performed in another electronic device, a plurality of electronic apparatuses (e.g., the first and second external electronic apparatuses 301 and 302), or the server 200. According to an example embodiment, if the user terminal apparatus 300 is to perform a function or service automatically or at a request, the user terminal apparatus 300 may additionally request at least some functions related to the function or service from another electronic apparatus (e.g., the first or second external electronic apparatus 301 or 320 or the server 200) instead of performing the function or service. Another electronic apparatus (e.g., the first or second external electronic apparatus 301 or 302 or the server 200) may perform a requested function or an additional function and transmit the performance result to the user terminal apparatus 300. The user terminal apparatus 300 may process a received result as it is or additionally to provide a requested function or service. For this, a cloud computing, distributed computing, or client-server computing technology may be used.

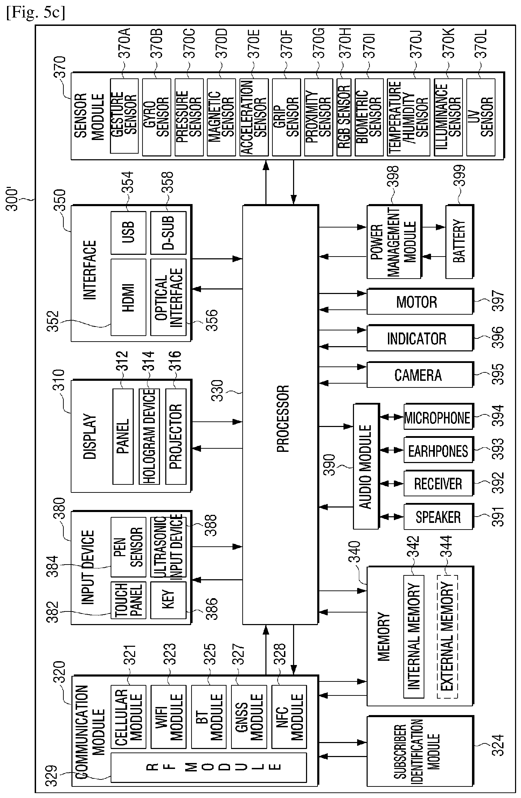

FIG. 5C is a block diagram illustrating an example configuration of a user terminal apparatus 300', according to an example embodiment. The user terminal apparatus 300' may include all or some of elements of the user terminal apparatus 300 illustrated in FIG. 5A or 5B. The user terminal apparatus 300' may include a display 310, a communication module (e.g., including communication circuitry) 320, one or more processors (e.g., APs) 330, a subscriber identification module 324, a memory 340, an interface 350, a sensor module 370, an input device 380, an audio module 390, a camera module 395, a power management module 398, a battery 399, an indicator 396, and a motor 397.

The processor 330 may drive an O/S or an application program to control a plurality of hardware or software elements connected to the processor 330 and perform various types of data processing and operations. For example, the processor 330 may be realized as a System on Chip (SoC). A detailed configuration of the processor 330 is the same as the detailed configuration of the processor 230, and thus a detailed description thereof is omitted.

The communication module 320 may have the same as or similar configuration to the communication interface 320 of FIG. 5B. The communication module 320 may include various communication circuitry, such as, for example, a cellular module 321, a WiFi module 323, a BT module 325, a GNSS module 327 (e.g., a GPS module, a Glonass module, a Beidou module, or a Galileo module), an NFC module 328, and a radio frequency (RF) module 329.

The cellular module 321 may provide a voice call, a video call, a message service, an Internet service, or the like through a communication network. According to an example embodiment, the cellular module 321 may identify and authenticate the user terminal apparatus 300' in a communication network by using the subscriber identification module 324 (e.g., a subscriber identity module (SIM) card). According to an example embodiment, the cellular module 321 may perform at least some of functions that may be provided by the processor 330. According to an example embodiment, the cellular module 321 may include a CP.

The WiFi module 323, the BT module 325, the GNSS module 327, or the NFC module 328 may include a processor for processing data transmitted and/or received through a corresponding module. According to an example embodiment, at least some (e.g., at least two or more) of the cellular module 321, the WiFi module 323, the BT module 325, the GNSS module 327, and the NFC module 328 may be included in an integrated chip (IC) or an IC package.

The RF module 329 may transmit and/or receive a communication signal (e.g., an RF signal). The RF module 329 may include a transceiver, a power amp module (PAM), a frequency filter, a low noise amplifier (LNA), an antenna, or the like. According to another example embodiment, at least one selected from the cellular module 321, the WiFi module 323, the BT module 325, the GNSS module 327, and the NFC module 328 may transmit and/or receive an RF signal through a separate RF module.

The subscriber identification module 324 may include a card and/or an embedded SIM including a subscriber identification module and may include unique identification information (e.g., an integrated circuit card identifier (ICCID)) or subscriber information (e.g., international mobile subscriber identity (IMSI)).

The memory 340 may include an internal memory 342 or an external memory 344. The internal memory 342 may include at least one selected from a volatile memory (e.g., a dynamic RAM (DRAM), a static RAM (SRAM), a synchronous dynamic RAM (SDRAM), or the like), a nonvolatile memory (e.g., an one time programmable ROM (OTPROM), a programmable ROM (PROM), an erasable and programmable ROM (EPROM), an electrically erasable and programmable ROM (EEPROM), a mask ROM, a flash ROM, and a solid state drive (SSD), or the like.

The external memory 344 may further include a flash drive, e.g., compact flash (CF), secure digital (SD), micro secure digital (Micro-SD), mini secure digital (Mini-SD), extreme digital (xD), a multimedia card (MMC), a memory stick, or the like. The external memory 344 may be functionally and/or physically connected to the user terminal apparatus 300' through various types of interfaces.

The sensor module 370 may include various ssensors that measure a physical quantity or may sense an operation state of the user terminal apparatus 300' and convert measured or sensed information into an electrical signal. The sensor module 370 may include one or more selected from a gesture sensor 370A, a gyro sensor 370B, a pressure sensor 370C, a magnetic sensor 370D, an acceleration sensor 370E, a grip sensor 370F, a proximity sensor 370G, a color sensor 370H (e.g., red (R), green (G), and blue (B) sensor), a biometric sensor 3701, a temperature/humidity sensor 370J, an illuminance sensor 370K, and an ultraviolet (UV) sensor 370L. The sensor module 370 may additionally or alternatively include an E-nose sensor, an electromyography (EMG) sensor, an electroencephalogram (EEG) sensor, an electrocardiogram (ECG) sensor, an infrared (IR) sensor, an iris sensor, and/or a fingerprint sensor. The sensor module 370 may further include a control circuit for controlling at least one or more sensors included in the sensor module 370. According to an example embodiment, the user terminal apparatus 300' may further include a processor, which is configured as a part of the processor 330 or separately from the processor 330 to control the sensor module 370, so as to enable the processor 330 to control the sensor module 370 while the processor 330 is in a sleep state.

In particular, the processor 330 may predict a dynamic motion of a user using data output from at least one selected from the gesture sensor 370A, the gyro sensor 370B, and the acceleration sensor 370E. For example, the processor 330 may analyze an output of the acceleration sensor 370E to determine that the user stops, walks, runs, or moves into a car.

The input device 380 may include various input circuitry including, for example, a touch panel 382, a (digital) pen sensor 384, a key 386, and an ultrasonic input unit 388. The touch panel 382 may use at least one selected from a capacitive type, a decompressive type, an IR type, and an ultrasonic type. The touch panel 382 may further include a control circuit. The touch panel 382 may further include a tactile layer to provide a tactile reaction to the user.

The (digital) pen sensor 384 may include a recognition sheet that is configured as a part of a touch panel or separately from the touch panel. The key 386 may include a physical button, an optical key, or a keypad. The ultrasonic input unit 388 may sense ultrasonic waves generated from an input tool through a microphone (e.g., a microphone 394) and check data corresponding to the sensed ultrasonic waves.

The display 310 may include at least one selected from a panel 312, a hologram device 314, and a projector 316. The panel 312 may be realized to be flexible, transparent, or wearable. The panel 312 may be integrated into one module along with the touch panel 382. The hologram device 314 may show a 3-dimensional (3D) image by using interference of light. The projector 316 may project light onto a screen to display an image. The screen may be positioned inside or outside the user terminal apparatus 300. According to an example embodiment, the display 310 may further include a control circuit for controlling the panel 312, the hologram device 314, or the projector 316.

The interface 350 may include an HDMI 352, a USB 354, an optical interface 356, and D-subminiature (D-sub) 358. The interface 350 may include the communication interface 320 of FIG. 5B. The interface 350 may additionally or alternatively include a mobile high-definition link (MHL) interface, a secure digital (SD) card/multimedia card (MMC) interface, or an infrared data association (IrDA) standard interface.

The audio module 390 may bidirectionally convert a sound and an electrical signal. At least some elements of the audio module 390 may be included in the I/O interface 350 of FIG. 5B. The audio module 390 may process sound information that is input or output through a speaker 391, a receiver 392, earphones 393, the microphone 394, or the like. In particular, the processor 330 may recognize a meeting situation by analyzing sound information input through the microphone 394.

The camera module 395 may be an apparatus capable of capturing a still image and a moving image. According to an example embodiment, the camera module 395 may include one or more image sensors (e.g., a front sensor or a rear sensor), a lens, an image signal processor (ISP), or flash (e.g., an LED, a xenon lamp, or the like).

The power management module 398 may manage power of the user terminal apparatus 300'. According to an example embodiment, the power management module 398 may include a power management integrated circuit (PMIC), a charger IC, or a battery or fuel gauge. The PMIC may have a wire and/or wireless charging method. The wireless charging method may include a magnetic resonance method, a magnetic induction method, an electromagnetic method, or the like and may further include an additional circuit for wireless charging, e.g., a coil loop, a resonance circuit, a rectifier, or the like. The battery gauge may measure a residual amount of the battery 399 and a voltage, a current, or a temperature when charging the battery 399. The battery 399 may include a rechargeable battery and/or a solar battery.

The indicator 396 may display the user terminal apparatus 300' or a part of the user terminal apparatus 300' (e.g., a particular state of the processor 330, e.g., a booting state, a message state, a recharging state, or the like). The motor 397 may convert an electrical signal into a mechanical vibration and generate a vibration or haptic effect, or the like. Although not illustrated in FIG. 5C, the user terminal apparatus 300' may include a processing apparatus (e.g., a GPU) for supporting a mobile TV. The processing apparatus for supporting the mobile TV may process media data complying with standards such digital multimedia broadcasting (DMB), digital video broadcasting (DVB), mediaFloTV, etc. Detailed configurations of the network apparatus 100 and the server 200 may be realized to be similar to a detailed configuration of the user terminal apparatus 300 or 300' of FIG. 5B or 5B, and thus their detailed descriptions are omitted.

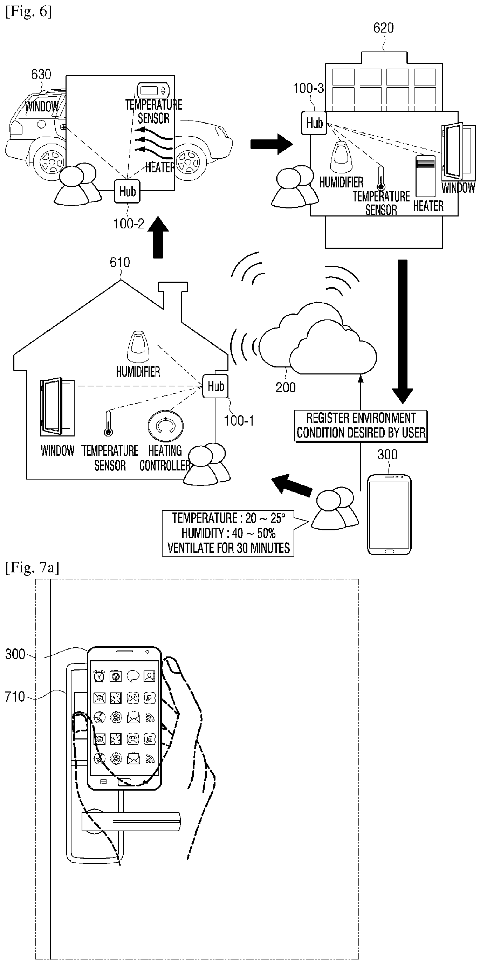

FIG. 6 is a diagram illustrating an example operation relation between a network apparatus, a server, and a user terminal apparatus, according to an example embodiment.

As illustrated in FIG. 6, network apparatuses 100-1, 100-2, and 100-3 may be respectively installed in different service spaces, e.g., in a home 610, an office 620, and a car 630, and may be realized to connect devices respectively installed in the service spaces to one another through a wired-wireless network based on the Internet so as to provide Internet of Things (loT) service sharing information.

Also, the network apparatuses 100-1, 100-2, and 100-3 may be realized to communicate with the server 200, and the server 200 may be realized to communicate with a user terminal apparatus 300.

A user may register an environment condition desired by the user by accessing the server 200 through the user terminal apparatus 300. For example, the user may register an environment condition such as a temperature between 20° and 22°, humidity between 40% and 50%, ventilate for 30 minutes.

If it is determined that the user enters into a particular service space, e.g., into the home 610, the network apparatus 100-1 installed in the home 610 may receive information about an environment condition registered by the user from the server 200 to control operation states of devices related to the corresponding environment condition among a plurality of devices installed in the home 610. For example, the network apparatus 100-1 may receive information about a temperature of the home 610 from a temperature sensor and control a heating controller or the like to control the temperature of the home 610 to a temperature between 20° and 22° set by the user based on the information. Also, the network apparatus 100-1 may control operation states of other devices, such as a window, a humidifier, etc., so as to meet other environment conditions set by the user, i.e., "humidity between 40 % and 50 %, ventilation condition for 30 minutes".

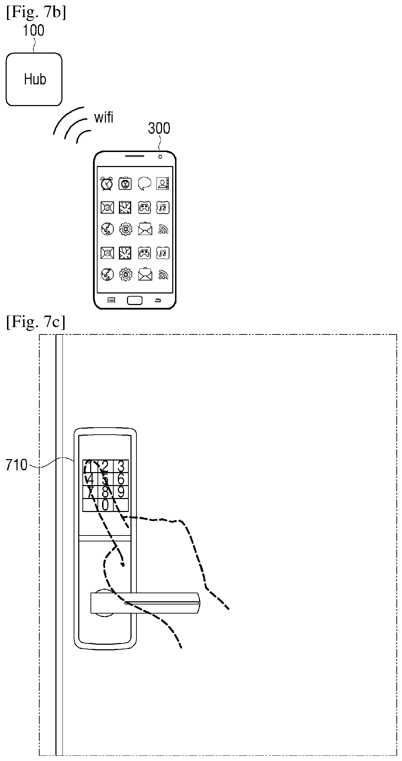

If it is determined that the user terminal apparatus 300 is connected to the network apparatus 100 (e.g., WiFi is connected) as illustrated in FIG. 7B, a device authentication (e.g., NFC) is performed through a home doorlock device 710 as illustrated in FIG. 7A, a user authentication (e.g., a fingerprint authentication) is performed through the home doorlock device 710 as illustrated in FIG. 7C, or the like, the network apparatus 100-1 may determine that the user enters into the home 610.

Also, if it is determined that the user enters into the office 620, the network apparatus 100-2 installed in the office 620 may receive information about an environment condition registered by the user from the server 200 to control operation states of devices related to the corresponding environment condition among a plurality of devices installed in the office 620.

Also, if it is determined that the user gets into the car 630, the network apparatus 100-3 installed in the car 630 may receive information about an environment condition registered by the user from the server 200 to control operation states of devices related to the corresponding environment condition among a plurality of devices installed in the car 630.

Therefore, the user may be provided with a desired environment condition in any service space by merely registering a desired environment condition in the server 200.

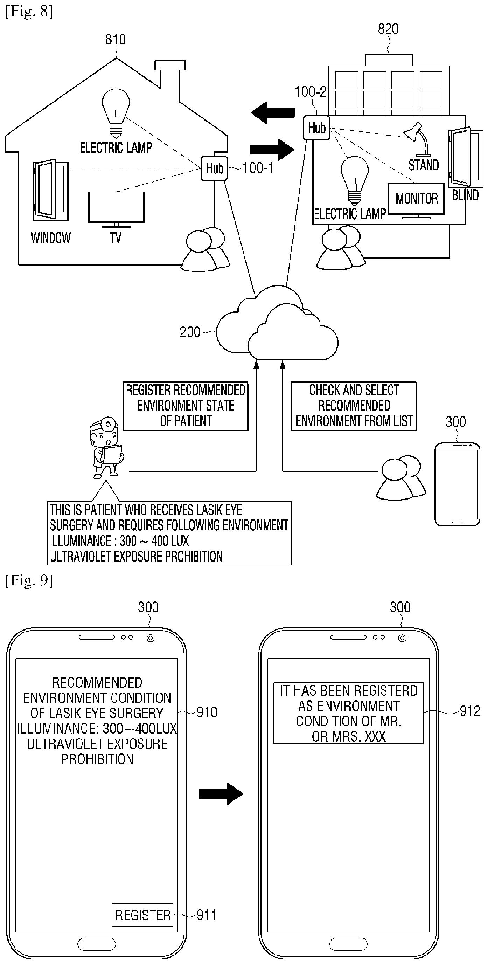

FIG. 8 is a diagram illustrating an example operation relation between a network apparatus, a server, and a user terminal apparatus, according to another example embodiment.

As illustrated in FIG. 8, another person other than a user may register information about a particular environment condition in the server 200, and the user may register an environment condition of the user by selecting one piece of the registered information. For example, if a doctor registers information about a recommended environment condition of a patient receiving LASIK eye surgery in the server 200, the server 200 may provide the corresponding environment condition as recommended information to the user, and the user receiving the LASIK eye surgery may select the recommended information provided from the server 200 and register the recommended information as an environment condition of the user.

For example, as illustrated in FIG. 9, if the user selects "LASIK eye surgery recommended environment condition" 910 from various types of recommended environment conditions provided through the user terminal apparatus 300 and then selects a registration button 911, the corresponding environment condition may be registered as an environment condition of the user. If the registration button 911 is selected, guide information "It has been registered as environment condition of Mr. or Mrs. ***." 912 may be provided as illustrated in FIG. 9.

However, if a fact that a particular user receives LASIK eye surgery is registered as a user profile in the server 200, the server 200 may automatically register a corresponding recommended environment condition as an environment condition of the corresponding user.

If it is determined that the user enters into a service space such as a home 810, the office 820, or the like, network apparatuses 100-1 and 100-2 respectively installed in services spaces may be provided with an environment condition from the server 200 and control operation states of devices respectively installed the service spaces so as to enable the operation states of the devices to correspond to the environment condition. For example, if the user enters into the home 810, and a registered environment condition "luminance between 300 Lux and 400 Lux and ultraviolet exposure prohibition", the network apparatus 100-1 may check a state of a blind and, if the blind is pulled up, pull the blind down. The network apparatus 100-1 may check a state of an electric lamp to control brightness of the electric lamp so as to enable the electric lamp to correspond to corresponding illuminance. However, a natural environment condition may be additionally considered. For example, if a current time is nighttime when the sun goes down, the network apparatus 100-1 does not need to pull the blind down. Therefore, even if the blind is pulled up, the network apparatus 100-1 may not perform an additional control of pulling the blind down.

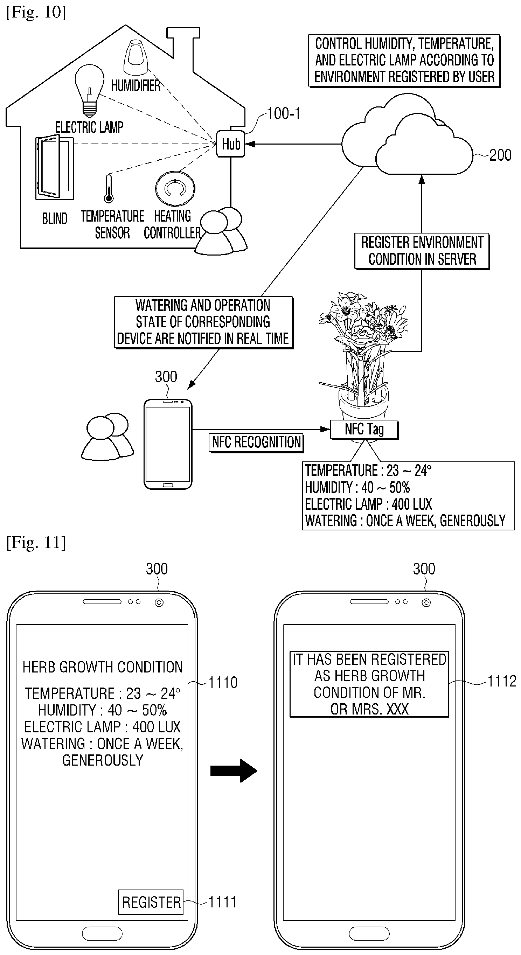

FIG. 10 is a diagram illustrating an example operation relation between a network apparatus, a server, and a user terminal apparatus, according to another example embodiment.

As illustrated in FIG. 10, if an environment condition of an object affected by an environment condition except a user is registered in the server 200, a network apparatus 100-1 installed in a home may receive information about the environment condition registered by the user from the server 200 to control operation states of devices related to the corresponding environment condition among a plurality of devices installed in the home. For example, if the user wants to cultivate a plant in a flowerpot in the home, an optimum environment condition where the plant is grown in the flowerpot is registered in the server 200. If a flowerpot is taken into the home, the network apparatus 100-1 may control operation states of related devices (e.g., an electric lamp, a blind, a temperature, a humidifier, a heating controller, etc.) so as to control humidity, temperature, electric lamp, etc. based on the environment condition registered in the server 200.

For example, if an NFC tag where an environment condition appropriate for growing the plant planted in the flowerpot is recorded is attached onto the flowerpot, the network apparatus 100-1 may read information recorded in the NFC tag and register the read information in the server 200 by using the user terminal apparatus 300. Alternatively, the user may search for a growth environment condition of the corresponding plant through an Internet search performed by using the user terminal apparatus 300 and register the growth environment condition in the server 200.

The server 200 may receive information about operation states of related devices from the network apparatus 100-1 and transmit the information to the user terminal apparatus 300 in real time. For example, the server 200 may transmit information about a watering state, a current temperature, a current illuminance, etc., to the user terminal apparatus 300 so as to enable the user to check a current environment condition of a corresponding space.

The server 200 may search for and provide information about a recommended environment condition of a particular object, and the user may select the recommended information provided from the server 200 and register the selected recommended information as an environment condition of the particular object. For example, as illustrated in FIG. 11, if the user selects herb growth conditions from various types of recommended environment conditions provided through the user terminal apparatus 300 and then selects a registration button 111, the corresponding environment condition may be registered as the herb growth condition. If the registration button 111 is selected, guide information "It has been registered as herb growth condition of Mr. or Mrs. ***" may be provided as illustrated in FIG. 11.

However, the user may merely register identification information of an object in the server 200 so as to enable the server 200 to automatically set an environment condition appropriate for the corresponding object. For example, if the user registers identification information "herb" in the server 200, the server 200 may automatically search for and set an environment condition appropriate for the identification information "herb".

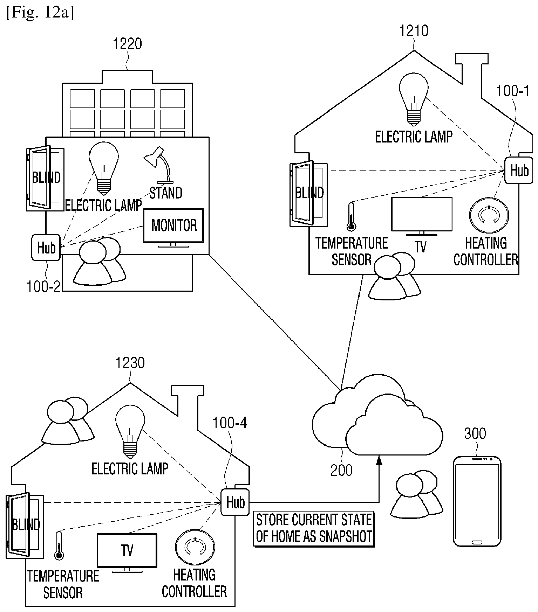

FIG. 12A is a diagram illustrating an example operation relation between a network apparatus, a server, and a user terminal apparatus, according to another example embodiment.

As illustrated in FIG. 12A, a user may register an environment condition, which is applied into a service space of another person other than the the user, as an environment condition of the user. For example, if the user visits a home of another person and likes an environment condition applied to the home of the other person, the user may store the environment condition applied to the home of the another person in the user terminal apparatus 300 and then register the environment condition in the server 200. For example, the user terminal apparatus 300 may receive an environment condition, which is currently applied, from a network apparatus 100-4 installed in the home of the other person and register the environment condition in the server 200.

Alternatively, the user may capture the home of the another person, generates a captured image as a snapshot image, and register the snapshot image in the server 200 using the user terminal apparatus 300. In this case, the user may enable environment conditions respectively measured by sensors to be automatically stored in the snapshot image so as to enable the server 200 to automatically extract an environment condition from the received snapshot image and register the environment condition. For example, the environment condition may be stored in a metadata form in a snapshot image format. As an example, the environment condition may be stored in a reserved field of a particular format. As another example, if the snapshot image includes a plurality of devices, environment conditions corresponding to first and second devices may be stored in different fields of one metadata. As another example, if the snapshot image includes a plurality of devices, metadata corresponding to a first device and metadata corresponding to a second device may be classified and stored.

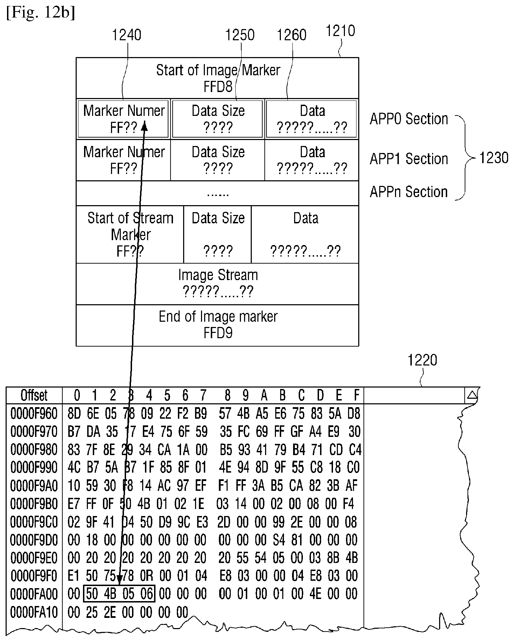

FIG. 12B is a diagram illustrating an example of a generated snapshot image according to an example embodiment.

According to the present example embodiment, the user terminal apparatus 300 may generate a snapshot image of a Joint Photographic Experts Group (JPEG) format by adding device information to metadata.

An upper diagram of FIG. 12B illustrates a structure of a snapshot image 1210, and a lower diagram of FIG. 12B illustrates binary information 1220 appearing when the snapshot image is opened by an actual editor. The user terminal apparatus 300 may include desired data in the snapshot image except several pieces of meta-information necessary for basic information of an image by using APPn Sections 1230.

Each of the APPn Sections 1230 may include a Marker Number 1240, a Data Size 1250, and Data 1260. The Marker Number 1240 indicates a start position of the APPn Section 1230. Also, the Data Size 1250 positioned behind the Marker Number 1240 indicates a size of data. The Data 1260 positioned behind the Data Size 1250 stores actually necessary information.

The Data 1260 may store, for example, 524362 bytes to the maximum and have a size enough to include at least one of IP information and MAC address information corresponding to an identified device in a captured image. The user terminal apparatus 300 may store a communication protocol of a device, a device name, a manufacturer, a function provided by the device, etc. in the Data 1260. The user terminal apparatus 300 may also include and store position information (e.g., x, y, width, height), etc. about an image of the device in the snapshot image.

Merely a snapshot image of a JPEG format has been described above but is not limited thereto. Therefore, any image of a form capable of adding device information may be used.

Also, the user terminal apparatus 300 may generate device information and image information as one file by using metadata or may classify the device information and the image information into a plurality of files. For example, the user terminal apparatus 300 may generate existing used image information as a snapshot image and generate information about at least one device as a file of an Extensible Mark-up Language (XML) format so as to control the device merely if there are two files.

Alternatively, the user terminal apparatus 300 may receive information about an environment condition applied to a home of another person in a UI screen form, check the information, capture the information as it is, and register the information in the server 200. Also, the user terminal apparatus 300 may copy an environment condition provided from the network apparatus 100-4 and register the copied environment condition in the server 200 or may revise a part of the environment condition and register the revised environment condition in the server 200.

Network apparatuses 100-1 and 100-2 installed in service spaces 1210 and 1220 of the user may receive corresponding information from the server 200 to control related devices installed in the service spaces 1210 and 1220 of the user. Therefore, the user may easily apply an environment condition applied into a service space of another person into a service space of the user as it is.

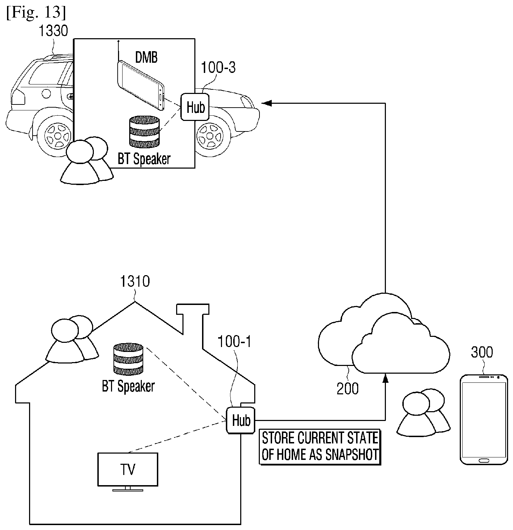

FIG. 13 is a diagram illustrating an example operation relation between a network apparatus, a server, and a user terminal apparatus, according to another example embodiment.

According to another example embodiment, if an environment condition of a user is changed according to time, the user may be provided with consecutive environment conditions even in a moved service space.

As illustrated in FIG. 13, if the user moves into a service space 1330 while enjoying a content in a service space 1310, the user may apply a content play condition applied into the service space 1310 consecutively into the service space 1330 as it is. For example, if the user goes out of a home while enjoying a particular music content or viewing a particular broadcast channel, the user may store a corresponding content play condition from the network apparatus 100-1 into the user terminal apparatus 300 and transmit the corresponding content play condition to the server 200. If the user moves into a car 1330, the network apparatus 100-3 installed in the car 1330 may receive a corresponding content play condition from the server 200 to control related devices. For example, the network apparatus 100-3 may turn on a car audio to automatically play a corresponding music content from a corresponding play time or may turn on a DMB device to automatically tune a corresponding channel. Therefore, the user may capture a content play condition of a home 1310 as it is and apply the captured content play condition to the car 1330 so as to enable the user to continuously enjoy a music content that the user is enjoying, from a play time at which the user hears the music content when going out of the home 1310 or so as to enable the user to automatically continuously view a broadcast channel that the user views in the home 1310.

However, according to example embodiments, if the user goes out of the home 1310, the network apparatus 100-1 may immediately transmit a content play condition applied into the home 1310 to the server 200. If the user gets into the car 1330, the server 200 may transmit the content play condition to the network apparatus 100-3 installed in the car 1330. In other words, the network apparatus 100-1 installed in the home 1310 and the network apparatus 100-3 installed in the car 1330 may transmit and/or receive the content play condition without an intervention of the user terminal apparatus 300.

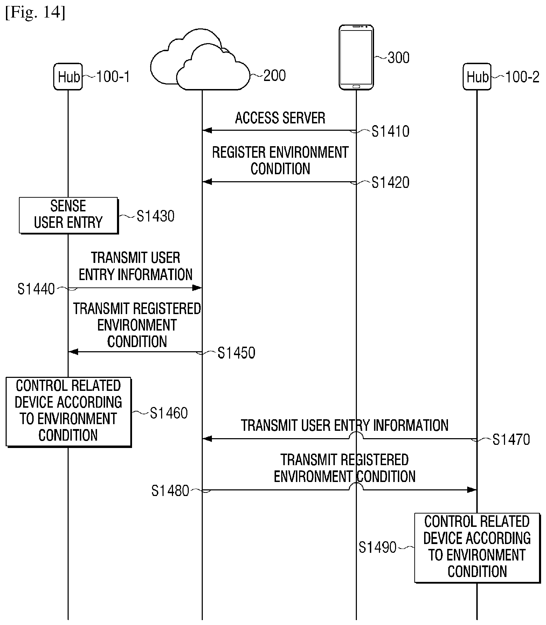

FIG. 14 is a sequence diagram illustrating an example operation relation between a network apparatus, a server, and a user terminal apparatus, according to an example embodiment.

Referring to FIG. 14, a user may access the server 200 using the user terminal apparatus 300 in operation S1410 and register an environment condition desired by the user in operation S1420.

If it is sensed in operation S1430 that the user enters into a corresponding service space, a first network apparatus 100-1 may transmit user entry information to the server 200 in operation S1440. Alternatively, if the entry of the user is sensed, the first network apparatus 100-1 may transmit a request signal for an environment condition registered in the server 200 to the serve 200.

If the environment condition registered in the server 200 is received from the server 200, the first network apparatus 100-1 controls a related device based on the received environment condition in operation S1460.

If it sensed in operation S1430 that the user enters into the corresponding service space, a second network apparatus 100-2 installed in another service space may also transmit user entry information to the server 200 in operation S1470 and receive information a registered environment condition from the server 200 in operation S1480. The second network apparatus 100-2 controls a related device based on the received environment condition in operation S1490. Therefore, the user may be automatically provided with an environment condition desired by the user in any place.

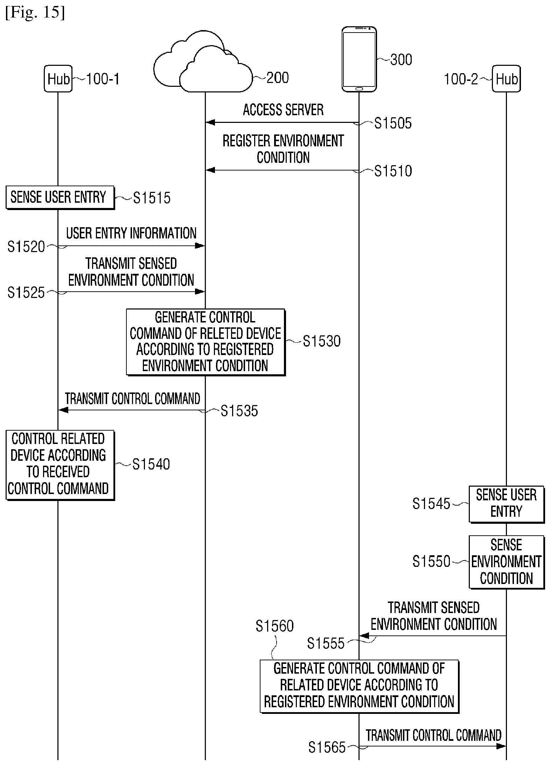

FIG. 15 is a sequence diagram illustrating an example operation relation between a network apparatus, a server, and a user terminal apparatus, according to another example embodiment.

Referring to FIG. 15, a user may access the server 200 by using the user terminal apparatus 300 in operation 1505 and register an environment condition desired by the user in operation S1510.

If it is sensed in operation S1515 that the user enters into a corresponding service space, a first network apparatus 100-1 installed in a preset service space may transmit user entry information to the server 200 in operation S1520. Alternatively, if a user entry is sensed, the first network apparatus 100-1 may transmit a request signal for an environment condition registered in the server 200 to the server 200.

The first network apparatus 100-1 may sense a current environment condition of the corresponding service space and transmit the current environment condition to the server 200 in operation S1525. However, operation S1520 may be omitted, and merely sensed information may be transmitted to the server 200.

In this case, the server 200 generates a control command of a related device for satisfying a registered environment condition based on the received current environment condition in operation S1530. The server 200 transmits the control command of the related device to the first network apparatus 100-1 in operation S1535.

In this case, the first network apparatus 100-1 may control the related device according to the received control command.

If it is senses in operation S1545 that the user enters into a corresponding service space, a second network apparatus 100-2 installed in the service space may sense a current environment condition of the service space in operation S1550 and transmit the current environment condition to the server 200 in operation S1555.

The user terminal apparatus 300 generates a control command of a related device for satisfying the registered environment condition based on the received current environment condition in operation S1560. The the user terminal apparatus 300 transmits the control command to the second network apparatus 100-2 in operation S1565.

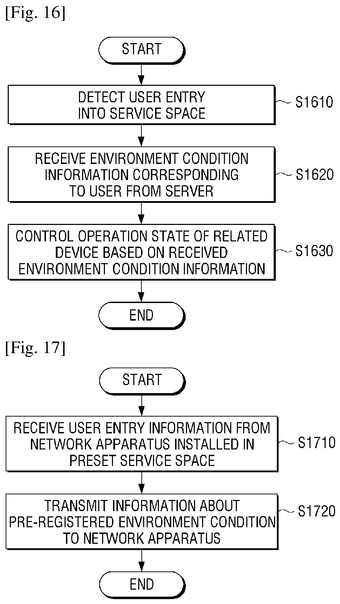

FIG. 16 is a flowchart illustrating an example method of controlling a network apparatus, according to an example embodiment.

Referring to FIG. 16, in operation S1610, a network apparatus installed in a preset service space detects whether a user enters into the service space. If it is detected in operation S1610 that the user enters into the service space, the network apparatus receives environment condition information corresponding to the user from a server storing environment condition information specialized for or corresponding to the user in operation S1620.

In operation S1630, the network apparatus controls an operation state of a related device of at least one devices based on the received environment condition information.

If it is determined that a user terminal apparatus of the user is connected to the network apparatus, the user terminal apparatus may determine that the user of the user terminal apparatus enters into the service space and transmit user entry information to the server in operation S1620.

Also, information about an environment condition may include information about at least one environment setting of an electric lamp, heating, and air, and the network apparatus may control an operation state of at least one of an electric lamp-received device, a heating-related device, and an air-related device according to received environment condition information.

Also, the server may further store environment condition information specialized for a preset object affected by an environment condition. In this case, according to the method, an operation state of a related device may be controlled according to environment condition information specialized for a preset object according to a preset event, and information about the operation state of the related device may be transmitted to the server.

Also, environment condition information stored in the server may be information that is directly set by the user or information that is selected by the user from recommended information corresponding to at least one user situation provided from the server.

FIG. 17 is a flowchart illustrating an example method of controlling a server according to an example embodiment.

Referring to FIG. 17, the server receives user entry information indicating that a user enters into a preset service space, from a network apparatus installed in the preset service space in operation S1710.

In operation S1720, the server transmits information about a pre-stored environment condition to the network apparatus so as to enable at least one device installed in the corresponding service space to operate according to an environment condition specialized for or corresponding to the user.

Here, the information about the environment condition may include information about at least one environment setting of an electric lamp, heating, and air, and a plurality of devices may include at least one selected from an electric lamp-related device, a heating-related device, and an air-related device.

Also, the method may further include, if it is determined that the user moves from a first service space into a second service space, transmitting control information for controlling an operation state of a second device related to a first device installed in the second service space to a network apparatus installed in a service space where the second device is installed, based on information about an operation state of a first device installed in the first service space.

The method may further include providing recommended information about an environment condition appropriate for the user according to a particular situation and storing information selected by the user from the provided recommended information as information about an environment condition specialized for the user.

A method of controlling a network apparatus or a server according to an example embodiment may be embodied to be performed by an application that is software directly used by a user on an O/S. Also, the application may be provided in an icon interface form on a screen of the user terminal apparatus 300 or another electronic apparatus but is not limited thereto.

As described above, a user may be automatically provided with a desired environment condition in a private service space, thereby improving convenience of the user.

Each of elements described herein may be configured as one or more components, and a name of a corresponding element may vary according to a type of electronic apparatus. According to various example embodiments, an electronic apparatus may include at least one selected from elements described herein and may omit some of the elements or may include additional other elements. Also, some of the elements of the electronic apparatus according to the various example embodiments may be combined into one entity so as to enable functions of uncombined corresponding elements to be equally performed.

Example embodiments disclosed herein are provided to describe and understand described contents but do not necessarily limit the scope of the technology described herein which is defined by the claims.

Methods of controlling a network apparatus, a server, and a user terminal apparatus according to various example embodiments as described above may be embodied as program codes that may be executed in a computer and then may be provided to each server or devices so as to be stored on various types of non-transitory computer readable media and then executed by a processor.

For example, a non-transitory computer readable medium, which stores a program performing, if it is determined that a user enters into a service space, receiving environment condition information corresponding to the user from a server storing environment condition information specialized for the user and controlling an operation state of a related device of at least one devices based on the received environment condition information, may be provided on a user terminal apparatus.

The aforementioned applications or programs may be stored in the non-transitory computer readable media such as compact disks (CDs), digital video disks (DVDs), hard disks, Blu-ray disks, universal serial buses (USBs), memory cards, and read-only memory (ROM).

The foregoing example embodiments and advantages are merely examples and are not to be construed as limiting the disclosure. The disclosure can be readily applied to other types of apparatuses. Also, the description of the example embodiments of the disclosure is intended to be illustrative, and not to limit the scope of the claims, and many alternatives, modifications, and variations will be apparent to those skilled in the art. The scope of the present disclosure is solely defined by the claims.

## Claims

1. A network apparatus (100), the network apparatus (100) comprising:
a communication circuitry (110) configured to communicate with a server (200) storing environment condition information corresponding to at least one user and at least one device installed in a preset service space; and
a processor (120) configured to:
receive, based on a determination that a user moves from a first service space into a second service space, environment condition information corresponding to the user from the server (200),
control an operation state of a first device installed in the second service space based on the received environment condition information,
wherein the received environment condition information comprises information on an operation state of a second device installed in the first service space, and
wherein a function of the first device is same as or similar to a function of the second device, wherein the function of the first device and the function of the second device are compared to determine the first device having the similar function to the second device based on at least one of product names, model names, and function information.

2. The network apparatus (100) of claim 1, wherein the communication circuitry (110) is configured to communicate with a user terminal apparatus (300) that is mobile,
wherein based on the user terminal apparatus (300) being operably connected to the communication circuitry (110), the processor (120) is configured to identify that a user of the user terminal apparatus (300) enters into the second service space and to transmit user entry information to the server (200).

3. The network apparatus (100) of claim 1, wherein the environment condition information comprises information about at least one environment setting for one or more of an electric lamp, heating, and air,
wherein the processor (120) is configured to control an operation state of one or more of an electric lamp-related device, a heating-related device, and an air-related device based on the received environment condition information.

4. The network apparatus of claim 1, wherein the processor is configured to control an operation state of the first device based on the environment condition information corresponding to an object and based on an event and to transmit information about the operation state of the first device to the server (200).

5. The network apparatus (100) of claim 1, wherein the environment condition information stored in the server (200) includes information set by the user or information selected by the user from recommended information, provided from the server (200), corresponding to at least one user situation.

6. A server (200) comprising:
a storage (220) configured to store environment condition information corresponding to at least one user and at least one device installed in a preset service space;
a communication circuitry (210); and
a processor (230) configured to:
transmit, based on user entry information indicating that a user moves from a first service space into a second service space being received from the network apparatus (100), information about an environment condition corresponding to the user stored in the storage to the network apparatus (100) to enable a first device installed in the second service space to operate based on the environment condition, and
compare a function of the first device and a function of a second device installed in the first service space to determine the first device having a similar function to the second device based on at least one of product names, model names, and function information,
wherein the processor is configured to, based on a determination that the user moves from the first service space into the second service space, transmit control information for controlling an operation state of the first device, installed in the second service space to a second network apparatus installed in the second service space,
wherein the information about the environment condition comprises information on an operation state of the second device installed in the first service space, and
wherein the first device performs a same or similar function to the second device.

7. The server (200) of claim 6, wherein the information about the environment condition comprises information about at least one environment setting for one or more of an electric lamp, heating, and air,
wherein at least one device comprises one or more of an electric lamp-related device, a heating-related device, and an air-related device.

8. The server (200) of claim 6, wherein the processor (230) is configured to provide recommended information about an environment condition appropriate for the user based on a particular situation and to store information selected by the user from the provided recommended information as the information about an environment condition corresponding to the user.

9. The server (200) of claim 6, wherein the environment condition information stored in the storage (220) includes information set by the user or information selected by the user from recommended information, provided by the processor (230), corresponding to at least one user situation.

10. A method of controlling a network apparatus (100), the method comprising:
receiving environment condition information corresponding to a user from a server (200) storing the environment condition information corresponding to the user based on a determination being made that the user moves from a first service space into a second service space,
comparing a function of a first device installed in the second service space and a function of a second device installed in the first service space to determine the first device having a similar function to the second device based on at least one of product names, model names, and function information,
controlling an operation state of the first device based on the received environment condition information,
wherein the received environment condition information comprises information on an operation state of the second device, and
wherein the first device performs a same or similar function to the second device.

11. The method of claim 10, wherein the receiving of the environment condition information corresponding to the user comprises, based on a determination that a user terminal apparatus (300) of the user is connected to the network apparatus (100), identifying that the user of the user terminal apparatus (300) enters the second service space and transmitting user entry information to the server (200).

12. The method of claim 10, wherein the environment condition information comprises information about one or more of an environment setting for one or more of an electric lamp, heating, and air,
wherein the controlling of the operation state of the at least one device comprises controlling an operation state of one or more of an electric lamp-related device, a heating-related device, and an air-related device based on the received environment condition information.

13. The method of claim 10, wherein the method further comprises controlling the operation state of the first device based on the environment condition information corresponding to an object and based on an event and transmitting information about the operation state of the first device to the server (200).

14. The method of claim 10, wherein the environment condition information stored in the server (200) is information set by the user or information selected by the user from recommended information, provided from the server (200), corresponding to at least one user situation.

## Patentansprüche

1. Netzwerkvorrichtung (100), wobei die Netzwerkvorrichtung (100) umfasst:
eine Kommunikationsschaltung (110), die dazu ausgestaltet ist, mit einem Server (200) zu kommunizieren, der Umgebungsbedingungsinformationen speichert, die wenigstens einem Benutzer und wenigstens einer in einem voreingestellten Dienstraum installierten Vorrichtung entsprechen; und
einen Prozessor (120), der für Folgendes ausgestaltet ist:
Empfangen - basierend auf einer Bestimmung, dass ein Benutzer sich aus einem ersten Dienstraum in einen zweiten Dienstraum bewegt - von Umgebungsbedingungsinformationen, die dem Benutzer entsprechen, von dem Server (200),
Steuern eines Betriebszustands einer ersten Vorrichtung, die in dem zweiten Dienstraum installiert ist, basierend auf den empfangenen Umgebungsbedingungsinformationen,
wobei die empfangenen Umgebungsbedingungsinformationen Informationen über einen Betriebszustand einer zweiten Vorrichtung, die in dem ersten Dienstraum installiert ist, umfassen und
wobei eine Funktion der ersten Vorrichtung gleich oder ähnlich einer Funktion der zweiten Vorrichtung ist, wobei die Funktion der ersten Vorrichtung und die Funktion der zweiten Vorrichtung verglichen werden, um die erste Vorrichtung, welche die ähnliche Funktion wie die zweite Vorrichtung aufweist, basierend auf wenigstens einem aus Produktnamen, Modellnamen und Funktionsinformationen zu bestimmen.

2. Netzwerkvorrichtung (100) nach Anspruch 1, wobei die Kommunikationsschaltung (110) dazu ausgestaltet ist, mit einem Benutzerendgerät (300) zu kommunizieren, das mobil ist,
wobei basierend darauf, dass das Benutzerendgerät (300) mit der Kommunikationsschaltung (110) wirkverbunden ist, der Prozessor (120) dazu ausgestaltet ist zu erkennen, dass ein Benutzer des Benutzerendgeräts (300) in den zweiten Dienstraum eintritt, und Benutzereintrittsinformationen an den Server (200) zu senden.

3. Netzwerkvorrichtung (100) nach Anspruch 1, wobei die Umgebungsbedingungsinformationen Informationen über wenigstens eine Umgebungseinstellung für eines oder mehrere aus einer elektrischen Lampe, einer Heizung und Luft umfassen,
wobei der Prozessor (120) dazu ausgestaltet ist, einen Betriebszustand einer oder mehrerer aus einer die elektrische Lampe betreffenden Vorrichtung, einer die Heizung betreffenden Vorrichtung und einer die Luft betreffenden Vorrichtung basierend auf den empfangenen Umgebungsbedingungsinformationen zu steuern.

4. Netzwerkvorrichtung nach Anspruch 1, wobei der Prozessor dazu ausgestaltet ist, einen Betriebszustand der ersten Vorrichtung basierend auf den Umgebungsbedingungsinformationen, die einem Objekt entsprechen, und basierend auf einem Ereignis zu steuern und Informationen über den Betriebszustand der ersten Vorrichtung an den Server (200) zu senden.

5. Netzwerkvorrichtung (100) nach Anspruch 1, wobei die Umgebungsbedingungsinformationen, die in dem Server (200) gespeichert sind, durch den Benutzer eingestellte Informationen oder durch den Benutzer aus empfohlenen Informationen ausgewählte Informationen umfassen, die von dem Server (200) entsprechend wenigstens einer Benutzersituation bereitgestellt werden.

6. Server (200), umfassend:
einen Speicher (220), der dazu ausgestaltet ist, Umgebungsbedingungsinformationen zu speichern, die wenigstens einem Benutzer und wenigstens einer Vorrichtung, die in einem voreingestellten Dienstraum installiert ist, entsprechen;
eine Kommunikationsschaltung (210); und
einen Prozessor (230), der für Folgendes ausgestaltet ist:
Senden - basierend darauf, dass Benutzereintrittsinformationen, die angeben, dass ein Benutzer sich aus einem ersten Dienstraum in einen zweiten Dienstraum bewegt, von der Netzwerkvorrichtung (100) empfangen werden - von Informationen über eine dem Nutzer entsprechende Umgebungsbedingung, die in dem Speicher gespeichert ist, an die Netzwerkvorrichtung (100), um eine erste Vorrichtung, die in dem zweiten Dienstraum installiert ist, in die Lage zu versetzen, basierend auf der Umgebungsbedingung zu arbeiten, und
Vergleichen einer Funktion der ersten Vorrichtung und einer Funktion einer zweiten Vorrichtung, die in dem ersten Dienstraum installiert ist, um basierend auf wenigstens einem aus Produktnamen, Modellnamen und Funktionsinformationen die erste Vorrichtung zu bestimmen, die eine ähnliche Funktion wie die zweite Vorrichtung aufweist,
wobei der Prozessor dazu ausgestaltet ist, basierend auf einer Bestimmung, dass der Benutzer sich aus dem ersten Dienstraum in den zweiten Dienstraum bewegt, Steuerinformationen zum Steuern eines Betriebszustands der ersten Vorrichtung, die in dem zweiten Dienstraum installiert ist, an eine zweite Netzwerkvorrichtung zu senden, die in dem zweiten Dienstraum installiert ist,
wobei die Informationen über die Umgebungsbedingung Informationen über einen Betriebszustand der zweiten Vorrichtung, die in dem ersten Dienstraum installiert ist, umfassen und
wobei die erste Vorrichtung eine gleiche oder ähnliche Funktion wie die zweite Vorrichtung ausführt.

7. Server (200) nach Anspruch 6, wobei die Informationen über die Umgebungsbedingung Informationen über wenigstens eine Umgebungseinstellung für eines oder mehrere aus einer elektrischen Lampe, einer Heizung und Luft umfassen,
wobei wenigstens eine Vorrichtung eine oder mehrere aus einer die elektrische Lampe betreffenden Vorrichtung, einer die Heizung betreffenden Vorrichtung und einer die Luft betreffenden Vorrichtung ist.

8. Server (200) nach Anspruch 6, wobei der Prozessor (230) dazu ausgestaltet ist, empfohlene Informationen über eine Umgebungsbedingung, die für den Benutzer basierend auf einer bestimmten Situation geeignet sind, bereitzustellen und Informationen, die durch den Benutzer aus den bereitgestellten empfohlenen Informationen ausgewählt werden, als die Informationen über eine Umgebungsbedingung, die dem Benutzer entsprechen, zu speichern.

9. Server (200) nach Anspruch 6, wobei die Umgebungsbedingungsinformationen, die in dem Speicher (220) gespeichert sind, durch den Benutzer eingestellte Informationen oder durch den Benutzer aus empfohlenen Informationen ausgewählte Informationen umfassen, die durch den Prozessor (230) entsprechend wenigstens einer Benutzersituation bereitgestellt werden.

10. Verfahren zur Steuerung einer Netzwerkvorrichtung (100), wobei das Verfahren umfasst:
Empfangen von Umgebungsbedingungsinformationen, die einem Benutzer entsprechen, von einem Server (200), der die Umgebungsbedingungsinformationen, die dem Benutzer entsprechen, speichert, basierend darauf, dass eine Bestimmung erfolgt, dass der Benutzer sich aus einem ersten Dienstraum in einen zweiten Dienstraum bewegt,
Vergleichen einer Funktion einer ersten Vorrichtung, die in dem zweiten Dienstraum installiert ist, und einer Funktion einer zweiten Vorrichtung, die in dem ersten Dienstraum installiert ist, um basierend auf wenigstens einem aus Produktnamen, Modellnamen und Funktionsinformationen die erste Vorrichtung zu bestimmen, die eine ähnliche Funktion wie die zweite Vorrichtung aufweist,
Steuern eines Betriebszustands der ersten Vorrichtung basierend auf den empfangenen Umgebungsbedingungsinformationen,
wobei die empfangenen Umgebungsbedingungsinformationen Informationen über einen Betriebszustand der zweiten Vorrichtung umfassen und
wobei die erste Vorrichtung eine gleiche oder ähnliche Funktion wie die zweite Vorrichtung ausführt.

11. Verfahren nach Anspruch 10, wobei das Empfangen der Umgebungsbedingungsinformationen, die dem Benutzer entsprechen, basierend auf einer Bestimmung, dass ein Benutzerendgerät (300) des Benutzers mit der Netzwerkvorrichtung (100) verbunden ist, ein Erkennen, dass der Benutzer des Benutzerendgeräts (300) in den zweiten Dienstraum eintritt, und ein Senden von Benutzereintrittsinformationen an den Server (200) umfasst.

12. Verfahren nach Anspruch 10, wobei die Umgebungsbedingungsinformationen Informationen über eine oder mehrere aus einer Umgebungseinstellung für eines oder mehrere aus einer elektrischen Lampe, einer Heizung und Luft umfassen,
wobei das Steuern des Betriebszustands der wenigstens einen Vorrichtung ein Steuern eines Betriebszustands einer oder mehrerer aus einer die elektrische Lampe betreffenden Vorrichtung, einer die Heizung betreffenden Vorrichtung und einer die Luft betreffenden Vorrichtung basierend auf den empfangenen Umgebungsbedingungsinformationen umfasst.

13. Verfahren nach Anspruch 10, wobei das Verfahren ferner ein Steuern des Betriebszustands der ersten Vorrichtung basierend auf den Umgebungsbedingungsinformationen, die einem Objekt entsprechen, und basierend auf einem Ereignis und ein Senden von Informationen über den Betriebszustand der ersten Vorrichtung an den Server (200) umfasst.

14. Verfahren nach Anspruch 10, wobei die Umgebungsbedingungsinformationen, die in dem Server (200) gespeichert sind, durch den Benutzer eingestellte Informationen oder durch den Benutzer aus empfohlenen Informationen ausgewählte Informationen sind, die von dem Server (200) entsprechend wenigstens einer Benutzersituation bereitgestellt werden.

## Revendications

1. Appareil de réseau (100), ledit appareil de réseau (100) comprenant :
un circuit de communication (110) prévu pour communiquer avec un serveur (200) stockant des informations de conditions d'environnement correspondant à au moins un utilisateur, et au moins un dispositif installé dans un espace de service défini ; et
un processeur (120) prévu pour :
recevoir du serveur (200), sur la base de la détermination qu'un utilisateur se déplace d'un premier espace de service à un deuxième espace de service, des informations de conditions d'environnement correspondant à l'utilisateur,
commander un état de fonctionnement d'un premier dispositif installé dans le deuxième espace de service sur la base des informations de conditions d'environnement reçues,
où les informations de conditions d'environnement reçues comprennent des informations sur un état de fonctionnement d'un deuxième dispositif installé dans le premier espace de service, et
où une fonction du premier dispositif est identique ou similaire à une fonction du deuxième dispositif, la fonction du premier dispositif et la fonction du deuxième dispositif étant comparées pour déterminer le premier dispositif ayant la fonction similaire au deuxième dispositif sur la base de noms de produit et/ou de noms de modèle et/ou d'informations de fonction.

2. Appareil de réseau (100) selon la revendication 1, où le circuit de communication (110) est prévu pour communiquer avec un terminal d'utilisateur (300) mobile,
où, sur la base d'une connexion fonctionnelle du terminal d'utilisateur (300) au circuit de communication (110), le processeur (120) est prévu pour identifier qu'un utilisateur du terminal d'utilisateur (300) entre dans le deuxième espace de service et pour transmettre des informations d'entrée d'utilisateur au serveur (200).

3. Appareil de réseau (100) selon la revendication 1, où les informations de conditions d'environnement comprennent des informations sur au moins un réglage environnemental pour un éclairage électrique et/ou un chauffage et/ou une ventilation,
où le processeur (120) est prévu pour commander un état de fonctionnement d'un dispositif relatif à un éclairage électrique et/ou d'un dispositif relatif à un chauffage et/ou d'un dispositif relatif à une ventilation sur la base des informations de conditions d'environnement reçues.

4. Appareil de réseau selon la revendication 1, où le processeur est prévu pour commander un état de fonctionnement du premier dispositif sur la base des informations de conditions d'environnement correspondant à un objet et sur la base d'un événement, et pour transmettre au serveur des informations sur l'état de fonctionnement du premier dispositif.

5. Appareil de réseau (100) selon la revendication 1, où les informations de conditions d'environnement stockées dans le serveur (200) comprennent des informations définies par l'utilisateur ou des informations sélectionnées par l'utilisateur à partir d'informations conseillées fournies par le serveur (200), correspondant à au moins une situation d'utilisateur.

6. Serveur (200), comprenant :
une mémoire (220) prévue pour stocker des informations de conditions d'environnement correspondant à au moins un utilisateur et au moins un dispositif installé dans un espace de service défini ;
un circuit de communication (210) ; et
un processeur (230) prévu pour :
sur la base d'informations d'entrée d'utilisateur reçues de l'appareil de réseau (100), indiquant qu'un utilisateur se déplace d'un premier espace de service à un deuxième espace de service, transmettre à l'appareil de réseau (100) des informations sur une condition d'environnement correspondant à l'utilisateur stocké dans la mémoire pour permettre à un premier dispositif installé dans le deuxième espace de service de fonctionner sur la base de la condition d'environnement, et
comparer une fonction du premier dispositif et une fonction d'un deuxième dispositif installé dans le premier espace de service pour déterminer le premier dispositif ayant une fonction similaire au deuxième dispositif sur la base de noms de produit et/ou de noms de modèle et/ou d'informations de fonction,
où, sur la base de la détermination que l'utilisateur se déplace du premier espace de service au deuxième espace de service, le processeur est prévu pour transmettre à un deuxième appareil de réseau installé dans le deuxième espace de service des informations de commande pour la commande d'un état de fonctionnement du premier dispositif installé dans le deuxième espace de service,
où les informations sur la condition d'environnement comprennent des informations sur un état de fonctionnement du deuxième dispositif installé dans le premier espace de service, et
où le premier dispositif exécute une fonction identique ou similaire au deuxième dispositif.

7. Serveur (200) selon la revendication 6, où les informations sur la condition d'environnement comprennent des informations sur au moins un réglage environnemental pour un éclairage électrique et/ou un chauffage et/ou une ventilation,
où au moins un dispositif comprend un dispositif relatif à un éclairage électrique et/ou un dispositif relatif à un chauffage et/ou un dispositif relatif à une ventilation.

8. Serveur (200) selon la revendication 6, où le processeur (230) est prévu pour fournir des informations conseillées sur une condition d'environnement appropriée pour l'utilisateur sur la base d'une situation particulière, et pour stocker des informations sélectionnées par l'utilisateur à partir des informations conseillées fournies en tant qu'informations sur une condition d'environnement correspondant à l'utilisateur.

9. Serveur (200) selon la revendication 6, où les informations de conditions d'environnement stockées dans la mémoire (220) comprennent des informations définies par l'utilisateur ou des informations sélectionnées par l'utilisateur à partir d'informations conseillées fournies par le processeur (230), correspondant à au moins une situation d'utilisateur.

10. Procédé de commande d'un appareil de réseau (100), ledit procédé comprenant :
la réception d'informations de conditions d'environnement correspondant à un utilisateur d'un serveur (200) stockant les informations de conditions d'environnement correspondant à l'utilisateur sur la base d'une détermination effectuée que l'utilisateur se déplace d'un premier espace de service à un deuxième espace de service,
la comparaison d'une fonction d'un premier dispositif installé dans le deuxième espace de service et d'une fonction d'un deuxième dispositif installé dans le premier espace de service afin de déterminer le premier dispositif ayant une fonction similaire au deuxième dispositif sur la base de noms de produit et/ou de noms de modèle et/ou d'informations de fonction,
la commande d'un état de fonctionnement du premier dispositif sur la base des informations de conditions d'environnement reçues,
où les informations de conditions d'environnement reçues comprennent des informations sur un état de fonctionnement du deuxième dispositif, et
où le premier dispositif exécute une fonction identique ou similaire au deuxième dispositif.

11. Procédé selon la revendication 10, où la réception des informations de conditions d'environnement correspondant à l'utilisateur comprend, sur la base de la détermination qu'un terminal d'utilisateur (300) de l'utilisateur est connecté à l'appareil de réseau (100), l'identification que l'utilisateur du terminal d'utilisateur (300) entre dans le deuxième espace de service, et la transmission au serveur (200) d'informations d'entrée d'utilisateur.

12. Procédé selon la revendication 10, où les informations de conditions d'environnement comprennent des informations sur un ou plusieurs réglages environnementaux pour un éclairage électrique et/ou un chauffage et/ou une ventilation,
où la commande de l'état de fonctionnement dudit au moins un dispositif comprend la commande d'un état de fonctionnement d'un dispositif relatif à un éclairage électrique et/ou d'un dispositif relatif à un chauffage et/ou d'un dispositif relatif à une ventilation sur la base des informations de conditions d'environnement reçues.

13. Procédé selon la revendication 10, où ledit procédé comprend en outre la commande de l'état de fonctionnement du premier dispositif sur la base des informations de conditions d'environnement correspondant à un objet et sur la base d'un événement, et la transmission au serveur (200) d'informations sur l'état de fonctionnement du premier dispositif.

14. Procédé selon la revendication 10, où les informations de conditions d'environnement stockées dans le serveur (200) sont des informations définies par l'utilisateur ou des informations sélectionnées par l'utilisateur à partir d'informations conseillées fournies par le serveur (200), correspondant à au moins une situation d'utilisateur.
